(19) **Europäisches Patentamt / European Patent Office / Office européen des brevets**

(11) **EP 4 590 035 A1**

(12) **EUROPEAN PATENT APPLICATION**
published in accordance with Art. 153(4) EPC

(43) Date of publication:
**23.07.2025 Bulletin 2025/30**

(21) Application number: **23864464.5**

(22) Date of filing: **05.07.2023**

(51) International Patent Classification (IPC):
***H04W 52/36*** (2009.01)

(52) Cooperative Patent Classification (CPC):
**H04W 52/24; H04W 52/36; H04W 52/38**

(86) International application number:
**PCT/CN2023/105838**

(87) International publication number:
**WO 2024/055727 (21.03.2024 Gazette 2024/12)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **15.09.2022  CN 202211125043**

(71) Applicant: **Datang Mobile Communications
Equipment Co., Ltd.
Beijing 100085 (CN)**

(72) Inventor: **ZHAO, Yali
Beijing 100085 (CN)**

(74) Representative: **Maiwald GmbH
Engineering
Elisenhof
Elisenstrasse 3
80335 München (DE)**

(54) **POWER HEADROOM REPORTING METHOD AND APPARATUS, TERMINAL DEVICE AND NETWORK DEVICE**

(57)     The present disclosure provides a method for reporting power headroom, device, terminal device, and network device. The method, performed by a terminal device, includes: triggering a power headroom report when a transmission path type changes; wherein the transmission path type comprises a direct path and/or an indirect path; the direct path is a transmission path for direct communication between the terminal device and the network device, and the indirect path is a transmission path requiring relay by a relay device for communication between the terminal device and the network device.

Triggering power headroom reporting when transmission path type changes — S201

FIG. 2

**Description**

**CROSS-REFERENCE TO RELATED APPLICATIONS**

This application claims priority to Chinese Patent Application No. 202211125043.3, filed in China on September 15, 2022, entitled "Method, Apparatus, Terminal Device, and Network Device for Reporting Power Headroom", the entire contents of which are incorporated herein by reference.

**TECHNICAL FIELD**

The present disclosure relates to the field of communication technology, and in particular, to a method, an apparatus, a terminal device, and a network device for reporting power headroom.

**BACKGROUND**

The 3rd Generation Partnership Project (3GPP) Release 18 (Rel-18) supports multi-path, where a terminal can simultaneously access a network device through a UE-to-Network Relay (U2N relay, referred to as U2N relay in this disclosure) and the Uu interface between the terminal and the network device, and the cell accessed by the terminal through the U2N relay and the cell accessed through the Uu interface can be the same cell or different cells. For the multi-path scenario, how to perform Power headroom Report (PHR) needs to be addressed, wherein UE refers to User Equipment, which can also be referred to as a terminal.

**SUMMARY**

The embodiments of the present disclosure provide a method, an apparatus, a terminal device, and a network device for reporting power headroom (PHR) to address the issue of performing PHR in multi-path scenarios.
In a first aspect, the embodiments of the present disclosure provide a method for reporting power headroom (PHR), which is performed by a terminal device, comprising:

triggering a power headroom report in the event of a change in the transmission path type;
wherein the transmission path type includes a direct path and/or an indirect path;
the direct path is a transmission path for direct communication between the terminal device and the network device, and the indirect path is a transmission path for communication between the terminal device and the network device that requires relay by a relay device.

Optionally, the change in the transmission path type includes at least one of the following:

a direct path is updated in the first cell;
an indirect path is updated in the first cell;
a direct path is updated by the terminal device;
an indirect path is updated by the terminal device;
the first cell includes at least one of the following: any cell configured for the terminal device, or any cell where the terminal device is currently in an active state;
the update includes at least one of the following: configuration, deconfiguration, activation, or deactivation.

Optionally, the calculation of the power headroom included in the power headroom report comprises at least one of the following:

calculating the power headroom based on the first target object;
calculating the power headroom based on different transmission path types on the first target object;
wherein the first target object includes one of the following: a cell, a carrier, or a bandwidth part (BWP);
the power headroom is determined based on the transmission power of the terminal device on the indirect path of the first target object.

Optionally, calculating the power headroom based on the first target object includes:

determining the power headroom of the terminal device on the first target object according to the maximum transmission power allowed for the terminal device on the first target object, the transmission power of the terminal device on the direct path of the first target object, and the transmission power of the terminal device on the indirect path of the first target object;

wherein the transmission power of the terminal device on the indirect path of the first target object includes: the transmission power used by the direct communication interface corresponding to the indirect path of the terminal device on the first target object, or the maximum transmission power allowed by the direct communication interface corresponding to the indirect path of the terminal device on the first target object.

Optionally, calculating the power headroom based on different transmission path types on the first target object includes:

determining the power headroom corresponding to the indirect path of the terminal device on the first target object based on the first parameter and the transmission power of the terminal device on the indirect path of the first target object;

determining the power headroom corresponding to the direct path of the terminal device on the first target object based on the second parameter and the transmission power of the terminal device on the direct path of the first target object;

wherein the transmission power of the terminal device on the indirect path of the first target object refers to the transmission power used by the direct communication interface corresponding to the indirect path of the terminal device on the first target object; the first parameter includes: the maximum transmission power allowed by the direct communication interface corresponding to the indirect path of the terminal device on the first target object, or the maximum transmission power allowed for the terminal device on the first target object; the second parameter includes: the maximum transmission power allowed for the direct path of the terminal device on the first target object, or the maximum transmission power allowed for the terminal device on the first target object.

Optionally, the method for determining the transmission power of the terminal device on the direct path of the first target object includes at least one of the following:

determining based on the transmission power used for PUSCH transmission on the direct path of the terminal device on the first target object;

determining based on the transmission power used for PUSCH transmission and the transmission power used for PUCCH transmission on the direct path of the terminal device on the first target object;

determining based on the transmission power used for SRS transmission on the direct path of the terminal device on the first target object.

Optionally, the method for determining the transmission power used by the direct communication interface corresponding to the indirect path of the terminal device on the first target object includes:

based on at least one of the following: the transmission power used for PSBCH transmission on the physical direct communication link of the indirect path on the first target object, the transmission power used for PSFCH transmission on the physical direct communication link of the indirect path on the first target object, the transmission power used for PSSCH transmission on the physical direct communication link of the indirect path on the first target object, and the transmission power used for PSCCH transmission on the physical direct communication link of the indirect path on the first target object.

Optionally, the method for determining the maximum transmission power allowed by the direct communication interface corresponding to the indirect path of the terminal device on the first target object includes at least one of the following:

determining based on the percentage of the maximum transmission power allowed by the direct communication interface corresponding to the indirect path or the maximum transmission power allowed for the terminal device on the direct path of the first target object relative to the maximum transmission power allowed for the terminal device on the first target object;

determining based on the maximum transmission power allowed for the terminal device on the direct path of the first target object;

determining based on protocol agreements, pre-configuration, or network device configuration.

optionally, after triggering the power headroom report, the method further includes:

reporting the power headroom when the first condition is met, where the power headroom is carried in the power headroom report;

wherein the first condition includes: the terminal device has obtained uplink resources from the network device, and the uplink resources can carry the power headroom report.

Optionally, the reporting of power headroom includes at least one of the following:

reporting the power headroom of the terminal device on all first target objects in an active state;

reporting the power headroom of the terminal device on the first target objects that have a direct path and are in an active state.

Optionally, the reporting of the power headroom of the terminal device on the first target object includes at least one of the following:

for one first target object, reporting only one power headroom corresponding to the first target object;

for one first target object, separately reporting the power headroom according to different transmission path types under the first target object.

Optionally, the terminal device transmits the power headroom on the first target object through the power headroom report, where the power headroom report further includes at least one of the following:

the transmission path type corresponding to the power headroom reported for one first target object;

the transmission power used by the direct communication interface corresponding to the indirect path of the terminal device on the first target object.

The maximum transmission power allowed by the direct communication interface corresponding to the indirect path of the terminal device on the first target object;

the maximum transmission power allowed for the terminal device on the direct path of the first target object.

Optionally, the method further includes:

reporting terminal capability information;

wherein the terminal capability information includes at least one of the following:

indicating whether the terminal device supports multi-path transmission;

indicating whether direct path and indirect path transmission are supported on the first target object, where the first target object includes: a frequency band, a frequency band combination, a cell, or different cells.

In a second aspect, the embodiments of the present disclosure also provide a reporting power headroom method performed by a network device, comprising:

receiving a power headroom report sent by the terminal device, where the power headroom report is sent to the network device when the transmission path type changes and the first condition is met;

wherein the first condition includes: the terminal device has obtained uplink resources from the network device, and the uplink resources can carry the power headroom report; the transmission path type includes: a direct path and/or an indirect path;

the direct path is a transmission path for direct communication between the terminal device and the network device, and the indirect path is a transmission path for communication between the terminal device and the network device that requires relay by a relay device.

Optionally, the network device obtains the power headroom of the terminal device on the first target object through the power headroom report, where the power headroom report further includes at least one of the following:

the transmission path type corresponding to the power headroom reported for one first target object;

the transmission power used by the direct communication interface corresponding to the indirect path of the terminal device on the first target object;

the maximum transmission power allowed by the direct communication interface corresponding to the indirect path of the terminal device on the first target object;

the maximum transmission power allowed for the terminal device on the direct path of the first target object;

wherein the first target object includes one of the following: a cell, a carrier, or a bandwidth part (BWP).

Optionally, the method further includes:

receiving terminal capability information sent by the terminal device;

wherein the terminal capability information includes at least one of the following:

indicating whether the terminal device supports multi-path transmission;

indicating whether direct path and indirect path transmission are supported on the first target object, where the first target object includes: a frequency band, a frequency band combination, a cell, or different cells.

In a third aspect, the embodiments of the present disclosure also provide a terminal device, including a memory, a transceiver, and a processor:

the memory is configured to store a computer program; the transceiver is configured to transmit and receive data under the control of the processor; the processor is configured to read the computer program stored in the memory and execute the following operations:
triggering a power headroom report in the event of a change in the transmission path type;
wherein the transmission path type includes: a direct path and/or an indirect path;
the direct path is a transmission path for direct communication between the terminal device and the network device, and the indirect path is a transmission path for communication between the terminal device and the network device that requires relay by a relay device.

Optionally, the change in the transmission path type includes at least one of the following:

a direct path is updated in the first cell;
an indirect path is updated in the first cell;
a direct path is updated by the terminal device;
an indirect path is updated by the terminal device;
the first cell includes at least one of the following: any cell configured for the terminal device, or any cell where the terminal device is currently in an active state;
the update includes at least one of the following: configuration, deconfiguration, activation, or deactivation.

Optionally, the calculation of the power headroom included in the power headroom report comprises at least one of the following:

calculating the power headroom based on the first target object;
calculating the power headroom based on different transmission path types on the first target object;
wherein the first target object includes one of the following: a cell, a carrier, or a bandwidth part (BWP);
the power headroom is determined based on the transmission power of the terminal device on the indirect path of the first target object.

Optionally, the processor is configured to read the computer program stored in the memory and execute the following operations:

determining the power headroom of the terminal device on the first target object based on the maximum transmission power allowed for the terminal device on the first target object, the transmission power of the terminal device on the direct path of the first target object, and the transmission power of the terminal device on the indirect path of the first target object;
wherein the transmission power of the terminal device on the indirect path of the first target object includes: the transmission power used by the direct communication interface corresponding to the indirect path of the terminal device on the first target object, or the maximum transmission power allowed by the direct communication interface corresponding to the indirect path of the terminal device on the first target object.

Optionally, the processor is configured to read the computer program stored in the memory and execute the following operations:

determining the power headroom corresponding to the indirect path of the terminal device on the first target object based on the first parameter and the transmission power of the terminal device on the indirect path of the first target object;
determining the power headroom corresponding to the direct path of the terminal device on the first target object based on the second parameter and the transmission power of the terminal device on the direct path of the first target object;
wherein the transmission power of the terminal device on the indirect path of the first target object refers to the transmission power used by the direct communication interface corresponding to the indirect path of the terminal device on the first target object; the first parameter includes: the maximum transmission power allowed by the direct communication interface corresponding to the indirect path of the terminal device on the first target object, or the maximum transmission power allowed for the terminal device on the first target object; the second parameter includes:

the maximum transmission power allowed for the direct path of the terminal device on the first target object, or the maximum transmission power allowed for the terminal device on the first target object.

Optionally, the method for determining the transmission power of the terminal device on the direct path of the first target object includes at least one of the following:

determining based on the transmission power used for PUSCH transmission on the direct path of the terminal device on the first target object;

determining based on the transmission power used for PUSCH transmission and the transmission power used for PUCCH transmission on the direct path of the terminal device on the first target object;

determining based on the transmission power used for SRS transmission on the direct path of the terminal device on the first target object.

Optionally, the method for determining the transmission power used by the direct communication interface corresponding to the indirect path of the terminal device on the first target object includes:

determining based on at least one of the following: the transmission power used for PSBCH transmission on the physical direct communication link of the indirect path on the first target object, the transmission power used for PSFCH transmission on the physical direct communication link of the indirect path on the first target object, the transmission power used for PSSCH transmission on the physical direct communication link of the indirect path on the first target object, and the transmission power used for PSCCH transmission on the physical direct communication link of the indirect path on the first target object.

Optionally, the method for determining the maximum transmission power allowed by the direct communication interface corresponding to the indirect path of the terminal device on the first target object includes at least one of the following:

determining based on the percentage of the maximum transmission power allowed by the direct communication interface corresponding to the indirect path or the maximum transmission power allowed for the terminal device on the direct path of the first target object relative to the maximum transmission power allowed for the terminal device on the first target object;

determining based on the maximum transmission power allowed for the terminal device on the direct path of the first target object;

determining based on protocol agreements, pre-configuration, or network device configuration.

Optionally, the processor is further configured to read the computer program stored in the memory and execute at least one of the following operations:

reporting the power headroom when the first condition is met, where the power headroom is carried in the power headroom report;

wherein the first condition includes: the terminal device has obtained uplink resources from the network device, and the uplink resources can carry the power headroom report.

Optionally, the processor is further configured to read the computer program stored in the memory and execute at least one of the following operations:

reporting the power headroom of the terminal device on all first target objects in an active state;

reporting the power headroom of the terminal device on the first target objects that have a direct path and are in an active state.

Optionally, the processor is configured to read the computer program stored in the memory and execute at least one of the following operations:

for one first target object, reporting only one power headroom corresponding to the first target object;

for one first target object, separately reporting the power headroom according to different transmission path types under the first target object.

Optionally, the terminal device transmits the power headroom on the first target object through the power headroom report, where the power headroom report further includes at least one of the following:

the transmission path type corresponding to the power headroom reported for one first target object;

the transmission power used by the direct communication interface corresponding to the indirect path of the terminal device on the first target object;

the maximum transmission power allowed by the direct communication interface corresponding to the indirect path of the terminal device on the first target object;

the maximum transmission power allowed for the terminal device on the direct path of the first target object.

Optionally, the processor is further configured to read the computer program stored in the memory and execute at least one of the following operations:

reporting terminal capability information through the transceiver;

wherein the terminal capability information includes at least one of the following:

indicating whether the terminal device supports multi-path transmission;

indicating whether direct path and indirect path transmission are supported on the first target object, where the first target object includes: a frequency band, a frequency band combination, a cell, or different cells.

In a fourth aspect, the embodiments of the present disclosure also provide a network device, including a memory, a transceiver, and a processor:

the memory is configured to store a computer program; the transceiver is configured to transmit and receive data under the control of the processor; the processor is configured to read the computer program stored in the memory and execute the following operations:

receiving, through the transceiver, a power headroom report sent by the terminal device, where the power headroom report is sent to the network device when the transmission path type changes and the first condition is met;

wherein the first condition includes: the terminal device has obtained uplink resources from the network device, and the uplink resources can carry the power headroom report; the transmission path type includes: a direct path and/or an indirect path;

the direct path is a transmission path for direct communication between the terminal device and the network device, and the indirect path is a transmission path for communication between the terminal device and the network device that requires relay by a relay device.

Optionally, the network device obtains the power headroom of the terminal device on the first target object through the power headroom report, where the power headroom report further includes at least one of the following:

the transmission path type corresponding to the power headroom reported for one first target object;

the transmission power used by the direct communication interface corresponding to the indirect path of the terminal device on the first target object;

the maximum transmission power allowed by the direct communication interface corresponding to the indirect path of the terminal device on the first target object;

the maximum transmission power allowed for the terminal device on the direct path of the first target object;

wherein the first target object includes one of the following: a cell, a carrier, or a bandwidth part (BWP).

Optionally, the processor is further configured to read the computer program stored in the memory and execute the following operations:

receiving, through the transceiver, terminal capability information sent by the terminal device;

wherein the terminal capability information includes at least one of the following:

indicating whether the terminal device supports multi-path transmission;

indicating whether direct path and indirect path transmission are supported on the first target object, where the first target object includes: a frequency band, a frequency band combination, a cell, or different cells.

In a fifth aspect, the embodiments of the present disclosure also provide a reporting power headroom device, which is applied to a terminal device, including:

a triggering unit, configured to trigger a power headroom report when the transmission path type changes;

wherein the transmission path type includes: a direct path and/or an indirect path;

the direct path is a transmission path for direct communication between the terminal device and the network device, and the indirect path is a transmission path for communication between the terminal device and the network device that requires relay by a relay device.

In a sixth aspect, the embodiments of the present disclosure also provide a reporting power headroom device, which is applied to a network device, including:

a first receiving unit, configured to receive a power headroom report sent by the terminal device, where the power headroom report is sent to the network device when the transmission path type changes and the first condition is met; wherein the first condition includes: the terminal device has obtained uplink resources from the network device, and the uplink resources can carry the power headroom report; the transmission path type includes: a direct path and/or an indirect path;
the direct path is a transmission path for direct communication between the terminal device and the network device, and the indirect path is a transmission path for communication between the terminal device and the network device that requires relay by a relay device.

In a seventh aspect, the embodiments of the present disclosure also provide a processor-readable storage medium, where the processor-readable storage medium stores a computer program, and the computer program is configured to enable the processor to perform the above-described methods.
The beneficial effects of the present disclosure are as follows:
according to the above solution, by triggering the power headroom report when the transmission path type changes, the triggering condition for the power headroom report is defined, ensuring that reporting power headroom can also be performed in multi-path scenarios.

## BRIEF DESCRIPTION OF THE DRAWINGS

FIG. 1 illustrates a schematic diagram of the multi-path transmission mechanism of a remote terminal;
FIG. 2 illustrates one of the flow diagrams of the reporting power headroom method according to the embodiments of the present disclosure;
FIG. 3 illustrates a detailed flow diagram of specific application scenarios according to the embodiments of the present disclosure;
FIG. 4 illustrates another flow diagram of the reporting power headroom method according to the embodiments of the present disclosure;
FIG. 5 illustrates one of the unit diagrams of the reporting power headroom device according to the embodiments of the present disclosure;
FIG. 6 illustrates a structural diagram of a terminal device according to the embodiments of the present disclosure;
FIG. 7 illustrates another unit diagram of the reporting power headroom device according to the embodiments of the present disclosure;
FIG. 8 illustrates a structural diagram of a network device according to the embodiments of the present disclosure.

## DETAILED DESCRIPTION

The technical solutions in the embodiments of the present disclosure will be described clearly and completely in conjunction with the accompanying drawings of the embodiments. It is apparent that the described embodiments are a part of the embodiments of the present disclosure, but not all of them. Based on the embodiments of the present disclosure, all other embodiments obtained by those of ordinary skill in the art without making creative efforts shall fall within the protection scope of the present disclosure.
The terms "first," "second," etc., in the specification and claims of the present disclosure are used to distinguish similar objects and do not necessarily describe a particular sequence or order. It should be understood that data used in this way can be interchanged under appropriate circumstances so that the embodiments of the present disclosure described herein, for example, may be implemented in orders other than those illustrated or described. Furthermore, the terms "comprises" and "has," as well as any variations thereof, are intended to cover non-exclusive inclusion. For example, a process, method, system, product, or device comprising a series of steps or units is not necessarily limited to those steps or units explicitly listed, but may include other steps or units not explicitly listed or inherent to the process, method, system, product, or device.
In the embodiments of the present disclosure, the term "and/or" describes an association relationship of associated objects, meaning that three types of relationships may exist. For example, "A and/or B" may mean: A exists alone, A and B exist together, or B exists alone. The symbol "/" generally indicates an "or" relationship between the associated objects before and after it. In the embodiments of the present disclosure, the term "multiple" refers to two or more, and other quantifiers are interpreted similarly.

In the embodiments of the present disclosure, the terms "exemplary" or "for example" are used to indicate an example, illustration, or explanation. Any embodiment or design described as "exemplary" or "for example" in the present disclosure should not be construed as being preferred or more advantageous than other embodiments or designs. Instead, the use of terms such as "exemplary" or "for example" is intended to present relevant concepts in a specific manner.

The following briefly explains the relevant concepts mentioned in the present disclosure.

1. PHR in cellular networks

PHR is a mechanism for a terminal to report the difference between the terminal's transmission power and its maximum power to the base station. The current PHR mechanism for the Uu interface is as follows:

1.1 PHR triggering mechanism

when the PHR triggering conditions are met, a PHR is triggered. In related technologies, some conditions for triggering PHR over the Uu interface are as follows:

A11, the prohibit PHR timer (prohibitPHR-Timer) has expired or is already expired, the terminal has resources for new uplink data transmission, and the path loss change since the last PHR reporting for at least one cell in the aggregated multiple activated cells exceeds the threshold;

A12, the periodic PHR timer (periodicPHR-Timer) has expired;

A13, the higher layer has configured or reconfigured the PHR function (excluding the configuration to prohibit PHR);

A14, a configured cell is activated.

PHR reporting mechanism

PHR reporting only reports PHR for configured and activated cells. Once PHR is triggered, the PHRs for all configured and activated cells are reported together in a single package.

2. Multi-path on U2N scenarios

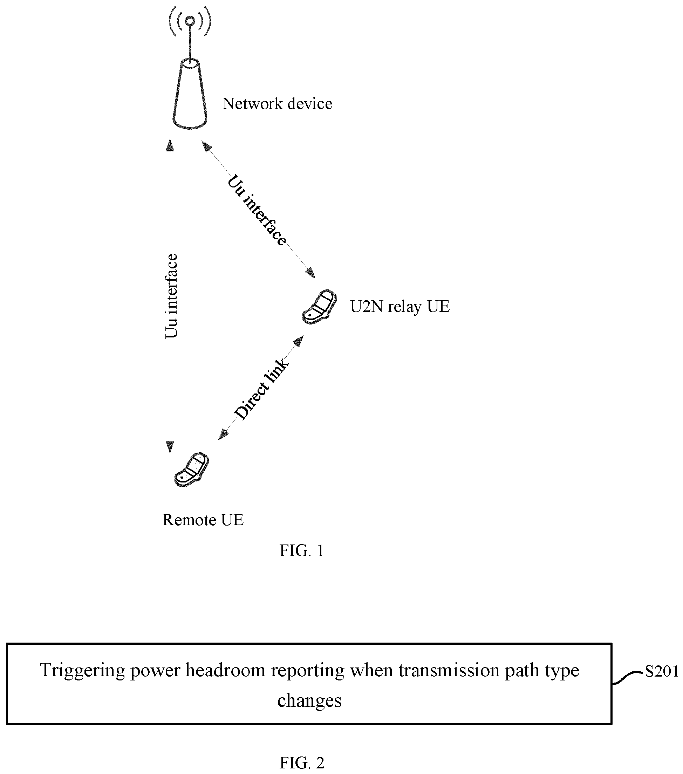

after the introduction of U2N relay, to enhance the peak rate and transmission reliability of terminals, 3GPP Rel-18 introduced a multi-path transmission mechanism, as shown in FIG. 1.

Multi-path refers to the terminal simultaneously accessing the network device via a direct Uu interface and via the U2N relay. In the U2N scenario, the concepts of direct path (direct path) and indirect path (indirect path) are introduced, defined as follows:

the direct path refers to the direct transmission path used for data transmission between the terminal and the network device. The meaning of the direct transmission path is that data transmission between the terminal and the network device does not require relay. In other words, the direct path is the transmission path for direct communication between the terminal device and the network device.

The indirect path refers to the transmission path used for data transmission between the terminal and the network device that requires relay. In other words, the indirect path is the transmission path for communication between the terminal device and the network device that requires relay via a relay device.

The embodiments of the present disclosure are described below in conjunction with the accompanying drawings. The reporting power headroom method, device, terminal device, and network device provided by the embodiments of the present disclosure can be applied to wireless communication systems. The wireless communication system may be a system adopting the Fifth Generation (5G) mobile communication technology (hereinafter referred to as the 5G system). It should be understood by those skilled in the art that the 5G New Radio (NR) system is merely an example and not a limitation.

The embodiments of the present disclosure provide a reporting power headroom method, device, terminal device, and network device to address the issue of performing PHR in multi-path scenarios.

The method and the device are based on the same inventive concept. Since the method and the device share similar principles for solving the problem, the implementation of the device and the method can refer to each other, and redundant details will not be repeated.

As shown in FIG. 2, the embodiments of the present disclosure provide a reporting power headroom method performed by a terminal device, comprising:

Step S201: triggering a power headroom report when the transmission path type changes;

wherein the transmission path type includes: a direct path and/or an indirect path;

the direct path refers to the transmission path for direct communication between the terminal device and the network device, and the indirect path refers to the transmission path for communication between the terminal device and the network device that requires relay via a relay device.

It should be noted that the power headroom report (Power headroom Report, PHR) can also be referred to as reporting power headroom. The power headroom report can be understood as signaling for reporting power headroom.

It should be further noted that the purpose of the power headroom report is to assist the network device in scheduling uplink or direct communication interfaces. After the power headroom report is triggered, it remains in a pending state, and reporting power headroom can only be performed when the first condition is met. The first condition includes: the terminal device has obtained uplink resources from the network device, and the uplink resources can carry the power headroom report.

It should be noted that, in the embodiments of the present disclosure, the terminal device simultaneously accesses the network device via a direct path and an indirect path on a cell, carrier, or bandwidth part (Bandwidth Part, BWP).

Optionally, the change in the transmission path type includes at least one of the following:

A11, a direct path is updated in the first cell;

A12, an indirect path is updated in the first cell;

A13, a direct path is updated by the terminal device;

A14, an indirect path is updated by the terminal device.

It should be noted that the first cell includes at least one of the following: any cell configured for the terminal device, any cell where the terminal device is currently in an active state;

the update includes at least one of the following: configuration, deconfiguration, activation, or deactivation.

For example, the change in the transmission path type may include at least one of the following cases:

A201, a configuration or deconfiguration of a direct path is performed on any cell configured for the terminal device;

A202, a configuration or deconfiguration of an indirect path is performed on any cell configured for the terminal device;

A203, a direct path is newly activated or deactivated on any cell configured for the terminal device;

A204, an indirect path is newly activated or deactivated on any cell configured for the terminal device;

A205, a configuration or deconfiguration of a direct path is performed on any cell where the terminal device is currently in an active state;

A206, a configuration or deconfiguration of an indirect path is performed on any cell where the terminal device is currently in an active state;

A207, a direct path is newly activated or deactivated on any cell where the terminal device is currently in an active state;

A208, an indirect path is newly activated or deactivated on any cell where the terminal device is currently in an active state;

A209, a direct path is newly configured or deconfigured by the terminal device;

A210, an indirect path is newly configured or deconfigured by the terminal device;

A211, a direct path is newly activated or deactivated by the terminal device;

A212, an indirect path is newly activated or deactivated by the terminal device.

Optionally, in another embodiment of the present disclosure, the calculation method of the power headroom included in the power headroom report includes at least one of the following:

B11, calculating the power headroom based on the first target object;

it should be noted that, in this case, the power headroom is calculated without distinguishing paths.

B12, calculating the power headroom based on different transmission path types on the first target object;

in this case, the power headroom is calculated separately for different transmission path types, i.e., the power headroom is calculated by distinguishing transmission paths.

Specifically, the first target object includes one of the following: a cell, a carrier, or a bandwidth part (BWP);

it should be noted that, whether B11 or B12 is adopted, the power headroom is determined based on the transmission power of the terminal device on the indirect path of the first target object.

Optionally, in another embodiment of the present disclosure, the specific implementation for calculating the power headroom based on the first target object includes:

determining the power headroom of the terminal device on the first target object based on the maximum transmission power allowed for the terminal device on the first target object, the transmission power of the terminal device on the direct path of the first target object, and the transmission power of the terminal device on the indirect path of the first target object;

wherein the transmission power of the terminal device on the indirect path of the first target object includes: the transmission power used by the direct communication interface corresponding to the indirect path of the terminal device on the first target object, or the maximum transmission power allowed by the direct communication interface corresponding to the indirect path of the terminal device on the first target object.

For example, in this case, the power headroom of the terminal device on the first target object is determined by the difference between the maximum transmission power allowed for the terminal device on the first target object, the transmission power of the terminal device on the direct path of the first target object, and the transmission power of the terminal device on the indirect path of the first target object. Specifically, it can be calculated using one of the following formulas:

$$\text{Formula 1: } PH = Pcmax,c - PUL,c - PSL,c;$$

$$\text{Formula 2: } PH = Pcmax,c - PUL,c - Pcmax,c,indirect;$$

wherein PH is the power headroom of the terminal device on the first target object, Pcmax,c is the maximum transmission power allowed for the terminal device on the first target object, PUL,c is the transmission power of the terminal device on the direct path of the first target object, PSL,c is the transmission power used by the direct communication interface corresponding to the indirect path of the terminal device on the first target object, and Pcmax,c,indirect is the maximum transmission power allowed by the direct communication interface corresponding to the indirect path of the terminal device on the first target object.

Optionally, in another embodiment of the present disclosure, the specific implementation for calculating the power headroom based on different transmission path types on the first target object includes:

C11, determining the power headroom corresponding to the indirect path of the terminal device on the first target object based on the first parameter and the transmission power of the terminal device on the indirect path of the first target object;

wherein the transmission power of the terminal device on the indirect path of the first target object refers to the transmission power used by the direct communication interface corresponding to the indirect path of the terminal device on the first target object; the first parameter includes: the maximum transmission power allowed by the direct communication interface corresponding to the indirect path of the terminal device on the first target object, or the maximum transmission power allowed for the terminal device on the first target object.

For example, in this case, the power headroom corresponding to the indirect path of the terminal device on the first target object is determined by the difference between the first parameter and the transmission power of the terminal device on the indirect path of the first target object. Specifically, it can be calculated using one of the following formulas:

$$\text{Formula 3: } PHindirect = Pcmax,c,indirect - PSL,c;$$

$$\text{Formula 4: } PHindirect = Pcmax,c - PSL,c;$$

wherein PHindirect is the power headroom corresponding to the indirect path of the terminal device on the first target object, Pcmax,c,indirect is the maximum transmission power allowed by the direct communication interface corresponding to the indirect path of the terminal device on the first target object, Pcmax,c is the maximum transmission power allowed for the terminal device on the first target object, and PSL,c is the transmission power used by the direct communication interface corresponding to the indirect path of the terminal device on the first target object.

C12, determining the power headroom corresponding to the direct path of the terminal device on the first target object based on the second parameter and the transmission power of the terminal device on the direct path of the first target object;

wherein the transmission power of the terminal device on the indirect path of the first target object refers to the transmission power used by the direct communication interface corresponding to the indirect path of the terminal device on the first target object; the second parameter includes: the maximum transmission power allowed for the terminal device on the direct path of the first target object, or the maximum transmission power allowed for the terminal device on the first target object.

For example, in this case, the power headroom corresponding to the direct path of the terminal device on the first target object is determined by the difference between the second parameter and the transmission power of the terminal device on the direct path of the first target object. Specifically, it can be calculated using one of the following formulas:

$$\text{Formula 5: } PHdirect = Pcmax,c,direct - PUL,c;$$

$$\text{Formula 6: } PHdirect = Pcmax,c - PUL,c;$$

wherein PHdirect is the power headroom corresponding to the direct path of the terminal device on the first target object, Pcmax,c is the maximum transmission power allowed for the terminal device on the first target object, PUL,c is the transmission power of the terminal device on the direct path of the first target object, and Pcmax,c,direct is the maximum transmission power allowed for the terminal device on the direct path of the first target object.

Optionally, in another embodiment of the present disclosure, the method for determining the transmission power of the terminal device on the direct path of the first target object includes at least one of the following:

D11, determining based on the transmission power used for Physical Uplink Shared Channel (PUSCH) transmission on the direct path of the terminal device on the first target object;
in this case, PUL,c = PPUSCH,c, where PPUSCH,c is the transmission power used for PUSCH transmission on the direct path of the terminal device on the first target object.

D12, determining based on the transmission power used for PUSCH transmission and the transmission power used for Physical Uplink Control Channel (PUCCH) transmission on the direct path of the terminal device on the first target object;

For example, the transmission power of the terminal device on the direct path of the first target object can be determined by summing the transmission power used for PUSCH transmission and the transmission power used for PUCCH transmission on the direct path of the terminal device on the first target object. Specifically, it can be determined based on the following formula: PUL,c = PPUSCH,c + PPUCCH,c; where PPUCCH,c is the transmission power used for PUCCH transmission on the direct path of the terminal device on the first target object.

D13, determining based on the transmission power used for Sounding Reference Signal (SRS) transmission on the direct path of the terminal device on the first target object;
in this case, PUL,c = PSRS,c, where PSRS,c is the transmission power used for SRS transmission on the direct path of the terminal device on the first target object.

Optionally, in another embodiment of the present disclosure, the method for determining the transmission power used by the direct communication interface corresponding to the indirect path of the terminal device on the first target object includes:
determining based on at least one of the following: the transmission power used for Physical Sidelink Broadcast Channel (PSBCH) transmission on the indirect path of the terminal device on the first target object, the transmission power used for Physical Sidelink Feedback Channel (PSFCH) transmission on the indirect path of the terminal device on the first target object, the transmission power used for Physical Sidelink Shared Channel (PSSCH) transmission on the indirect path of the terminal device on the first target object, and the transmission power used for Physical Sidelink Control Channel (PSCCH) transmission on the indirect path of the terminal device on the first target object.

For example, the method for determining the transmission power used by the direct communication interface corresponding to the indirect path of the terminal device on the first target object preferably includes one of the following:

D21, PSL,c = PPSBCH,c;
D22, PSL,c = PPSFCH,c;

$$\text{D23, } PSL,c = PPSSCH,c + PPSCCH,c;$$

$$\text{D24, } PSL,c = PPSSCH,c + PPSSCH,c + PPSBCH,c;$$

$$D25, \; PSL,c = PPSSCH,c + PPSCCH,c + PPSFCH,c;$$

$$D26, \; PSL,c = PPSSCH,c + PPSCCH,c + PPSFCH,c + PPSBCH,c;$$

wherein PPSBCH,c is the transmission power used for PSBCH transmission on the indirect path of the terminal device on the first target object, PPSFCH,c is the transmission power used for PSFCH transmission on the indirect path of the terminal device on the first target object, PPSSCH,c is the transmission power used for PSSCH transmission on the indirect path of the terminal device on the first target object, and PPSCCH,c is the transmission power used for PSCCH transmission on the indirect path of the terminal device on the first target object.

Optionally, in another embodiment of the present disclosure, the method for determining the maximum transmission power allowed by the direct communication interface corresponding to the indirect path of the terminal device on the first target object includes at least one of the following:

D31, determining based on the percentage of the maximum transmission power allowed for the terminal device on the direct path of the first target object or the maximum transmission power allowed by the direct communication interface corresponding to the indirect path of the terminal device on the first target object relative to the maximum transmission power allowed for the terminal device on the first target object;

it should be noted that, in this case, the percentage is determined by protocol agreement, pre-configuration, or network device configuration (broadcast or configured via dedicated signaling). For example, the percentage of the maximum transmission power allowed for the terminal device on the direct path of the first target object relative to the maximum transmission power allowed for the terminal device on the first target object, or the percentage of the maximum transmission power allowed by the direct communication interface corresponding to the indirect path of the terminal device on the first target object relative to the maximum transmission power allowed for the terminal device on the first target object. Since the sum of the maximum transmission power allowed for the direct path and the maximum transmission power allowed by the direct communication interface corresponding to the indirect path equals the maximum transmission power allowed for the terminal device on the first target object, the terminal device can determine the percentage of one component when the percentage of the other is known.

D32, determining based on the maximum transmission power allowed for the terminal device on the direct path of the first target object;

it should be noted that, in this case, the maximum transmission power allowed for the terminal device on the direct path of the first target object is determined by protocol agreement, pre-configuration, or network device configuration (broadcast or configured via dedicated signaling). The terminal device can determine the maximum transmission power allowed by the direct communication interface corresponding to the indirect path on the first target object by subtracting the maximum transmission power allowed for the terminal device on the direct path of the first target object from the maximum transmission power allowed for the terminal device on the first target object.

D33, determining based on protocol agreement, pre-configuration, or network device configuration;

it should be noted that, in this case, the maximum transmission power allowed by the direct communication interface corresponding to the indirect path of the terminal device on the first target object is determined by protocol agreement, pre-configuration, or network device configuration (broadcast or configured via dedicated signaling).

Optionally, in another embodiment of the present disclosure, after triggering the power headroom report, the method further includes: reporting the power headroom when the first condition is met, wherein the power headroom is carried in the power headroom report.

wherein the first condition includes: the terminal device has obtained uplink resources from the network device, and the uplink resources can carry the power headroom report.

Optionally, reporting the power headroom includes at least one of the following:

E11, reporting the power headroom of the terminal device on all first target objects in an activated state;

it should be noted that, in this case, the terminal device may have only a direct path, only an indirect path, or both direct and indirect paths on the first target object.

E12, reporting the power headroom of the terminal device on the first target objects with a direct path and in an activated state;

it should be noted that, in this case, the terminal device may have only a direct path or both direct and indirect paths on the first target object.

For the above E11 and E12, optionally, in at least one embodiment of the present disclosure, reporting the power headroom of the terminal device on the first target object includes at least one of the following:

> E21, for one first target object, reporting only one power headroom corresponding to the first target object;
> under normal circumstances, this approach corresponds to the power headroom calculation method B11.

E22, for one first target object, reporting the power headroom separately according to different transmission path types under the first target object;
under normal circumstances, this approach corresponds to the power headroom calculation method B12.

Optionally, in at least one embodiment of the present disclosure, the terminal device transmits the power headroom of the terminal device on the first target object via the power headroom report (e.g., PHR Medium Access Control Control Element (MAC CE)), and the power headroom report further includes at least one of the following:

> F11, the transmission path type corresponding to the power headroom reported for one first target object;
> F12, PSL,c;
> F13, Pcmax,c indirect;
> F14, Pcmax,c,direct.

Optionally, in at least one embodiment of the present disclosure, the method further includes:

> reporting terminal capability information;
> wherein the terminal capability information includes at least one of the following:
>
> > H11, indicating whether the terminal device supports multi-path transmission;
> > that is, indicating whether the terminal device supports direct path and indirect path transmission.

H12, indicating whether the first target supports direct path and indirect path transmission, wherein the first target includes: a frequency band, a band combination, a cell, or different cells.

The following provides a detailed description of the specific application of the embodiments of the present disclosure in practical scenarios.

Application Scenario 1,

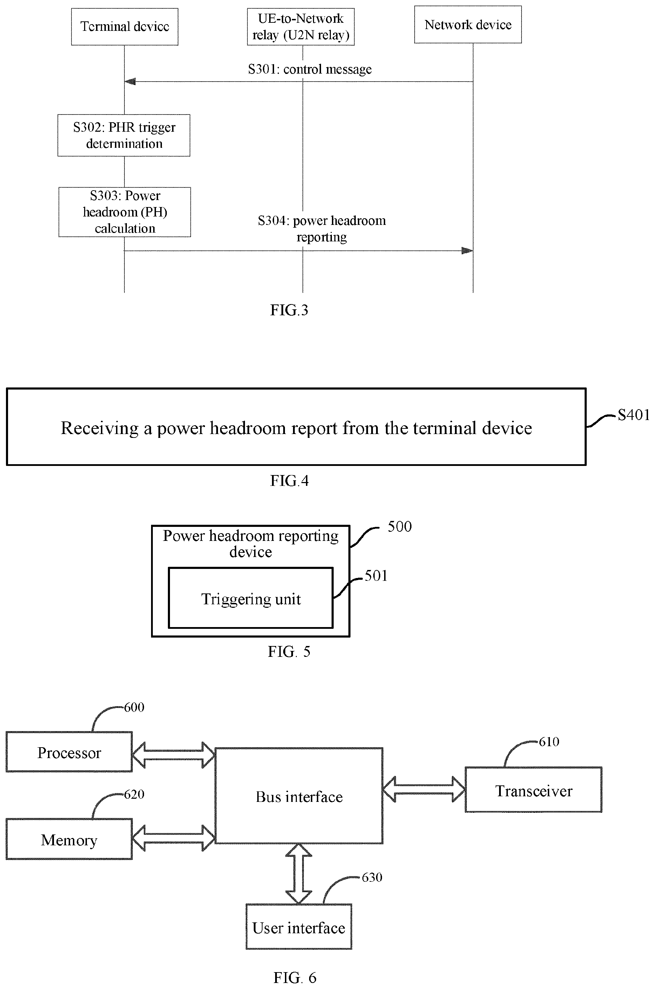

as shown in FIG. 3, the specific implementation process includes:

> Step S301, the network device sends a control message to the terminal device;
> the control message may be, but is not limited to, a Radio Resource Control (RRC) reconfiguration message or a MAC CE. If the RRC reconfiguration signaling is used, the RRC reconfiguration message can be used to configure or deconfigure a direct path or an indirect path for a carrier or cell. If the MAC CE is used, the MAC CE can be used to activate or deactivate a direct path or an indirect path for a carrier or cell.

Before Step S301, the terminal may also report terminal capability information to the network device, and the network device determines how to send the control signaling based on the capability indication information reported by the terminal. Specifically, the terminal capability indication information includes at least one of the following:

> indicating whether the terminal device supports direct path and indirect path transmission;
> indicating whether the first target supports direct path and indirect path transmission, wherein the first target includes: a frequency band, a band combination, a cell, or different cells.

Step S302: PHR triggering judgment;
in this embodiment, in addition to the PHR trigger decision conditions in the related technology, new reporting power headroom trigger conditions are introduced. The new reporting power headroom trigger condition is: when the transmission path type of the terminal device changes, it triggers the PHR. The changes in the transmission path type of the terminal device specifically include, but are not limited to, one or more of the following:

> a configuration or deconfiguration of a direct path is performed on any cell configured for the terminal device;
> a configuration or deconfiguration of an indirect path is performed on any cell configured for the terminal device;
> a direct path is newly activated or deactivated on any cell configured for the terminal device;
> an indirect path is newly activated or deactivated on any cell configured for the terminal device;

a configuration or deconfiguration of a direct path is performed on any cell where the terminal device is currently in an active state;

a configuration or deconfiguration of an indirect path is performed on any cell where the terminal device is currently in an active state;

a direct path is newly activated or deactivated on any cell where the terminal device is currently in an active state;

an indirect path is newly activated or deactivated on any cell where the terminal device is currently in an active state;

a direct path is newly configured or deconfigured by the terminal device;

an indirect path is newly configured or deconfigured by the terminal device;

a direct path is newly activated or deactivated by the terminal device;

an indirect path is newly activated or deactivated by the terminal device.

Step S303: PH calculation;

in this embodiment, PH is calculated based on each carrier or cell.

In this embodiment, when calculating the power headroom on a carrier or cell, the terminal device needs to deduct the transmission power of the terminal device on the indirect path of the carrier or cell.

Specifically, the terminal device calculates the PH of the carrier or cell without distinguishing between the direct path and the indirect path, i.e., PH is calculated based on Formula 1 or Formula 2 mentioned above.

Step S304: the terminal device reports the power headroom on the resources configured by the network device;

in this embodiment, the terminal device reports the power headroom in one of the following ways:

Method 1: reporting the power headroom of the terminal device on all first target objects in an activated state; optionally, for all the first target objects in the activated state, reporting only one power headroom corresponding to the first target object; or reporting the power headroom separately according to different transmission path types under all first target objects in the activated state.

Method 2: reporting the power headroom of the terminal device on the first target objects with a direct path and in an activated state.

Optionally, for the first target objects with a direct path and in an activated state, reporting only one power headroom corresponding to the first target object; or reporting the power headroom separately according to different transmission path types under the first target objects with a direct path and in an activated state.

Optionally, when the terminal device reports the power headroom, the PHR MAC CE also needs to carry one or a combination of the following information: the transmission path type corresponding to the power headroom reported for a first target object, PSL,c, Pcmax,c,indirect, Pcmax,c,direct.

Optionally, it is also possible to restrict the PHR MAC CE to be transmitted only via the direct path.

Application Scenario 2,

the specific implementation of this scenario is shown in FIG. 3 and includes:

Step S301: the network device sends a control message to the terminal device;

the control message may be, but is not limited to, an RRC reconfiguration message or a MAC CE. If the RRC reconfiguration signaling is used, the RRC reconfiguration message can be used to configure or deconfigure a direct path or an indirect path for a carrier or cell. If the MAC CE is used, the MAC CE can be used to activate or deactivate a direct path or an indirect path for a carrier or cell.

Before Step S301, the terminal may also report terminal capability information to the network device, and the network device determines how to send the control signaling based on the capability indication information reported by the terminal. Specifically, the terminal capability indication information includes at least one of the following:

indicating whether the terminal device supports direct path and indirect path transmission;

indicating whether the first target supports direct path and indirect path transmission, wherein the first target includes: a frequency band, a band combination, a cell, or different cells.

Step S302: PHR triggering judgment;

in this embodiment, in addition to the PHR trigger decision conditions in the related technology, new reporting power headroom trigger conditions are introduced. The new reporting power headroom trigger condition is: when the transmission path type of the terminal device changes, it triggers the PHR. The changes in the transmission path type of the terminal device specifically include, but are not limited to, one or more of the following:

a configuration or deconfiguration of a direct path is performed on any cell configured for the terminal device;

a configuration or deconfiguration of an indirect path is performed on any cell configured for the terminal device;

a direct path is newly activated or deactivated on any cell configured for the terminal device;

an indirect path is newly activated or deactivated on any cell configured for the terminal device;

a configuration or deconfiguration of a direct path is performed on any cell where the terminal device is currently in an active state;

a configuration or deconfiguration of an indirect path is performed on any cell where the terminal device is currently in an active state;

a direct path is newly activated or deactivated on any cell where the terminal device is currently in an active state;

an indirect path is newly activated or deactivated on any cell where the terminal device is currently in an active state;

a direct path is newly configured or deconfigured by the terminal device;

an indirect path is newly configured or deconfigured by the terminal device;

a direct path is newly activated or deactivated by the terminal device;

an indirect path is newly activated or deactivated by the terminal device.

Step S303: PH calculation;

in this embodiment, PH is calculated based on each carrier or cell.

In this embodiment, when calculating the power headroom on a carrier or cell, the terminal device needs to deduct the transmission power of the terminal device on the indirect path of the carrier or cell.

The PH of the carrier or cell is calculated differently based on the Path type, i.e., direct path and indirect path are calculated as follows:

the power headroom corresponding to the Direct path is calculated based on Formula 5 or Formula 6 mentioned above.

the power headroom corresponding to the Indirect path is calculated based on Formula 3 or Formula 4 mentioned above.

Step S304: the terminal device reports the power headroom on the resources configured by the network device; in this embodiment, the terminal device reports the power headroom in one of the following ways:

Method 1: reporting the power headroom of the terminal device on all first target objects in an activated state; optionally, for all the first target objects in the activated state, reporting only one power headroom corresponding to the first target object; or reporting the power headroom separately according to different transmission path types under all first target objects in the activated state.

Method 2: reporting the power headroom of the terminal device on the first target objects with a direct path and in an activated state.

Optionally, for the first target objects with a direct path and in an activated state, reporting only one power headroom corresponding to the first target object; or reporting the power headroom separately according to different transmission path types under the first target objects with a direct path and in an activated state.

Optionally, when reporting the power headroom, the PHR MAC CE also needs to carry one or a combination of the following information: the transmission path type corresponding to the power headroom reported for a first target object, PSL,c, Pcmax,c,indirect, Pcmax,c,direct.

Optionally, it is also possible to restrict the PHR MAC CE to be transmitted only via the direct path.

It should be noted that at least one embodiment of the present disclosure provides a reporting power headroom method for multi-path transmission scenarios. This method addresses the problem of how the terminal reports power headroom after the introduction of the indirect path.

The technical solutions provided by the embodiments of the present disclosure can be applied to various systems, especially 5G systems. For example, applicable systems may include Global System for Mobile Communication (GSM) systems, Code Division Multiple Access (CDMA) systems, Wideband Code Division Multiple Access (WCDMA) systems, General Packet Radio Service (GPRS) systems, Long Term Evolution (LTE) systems, LTE Frequency Division Duplex (FDD) systems, LTE Time Division Duplex (TDD) systems, Long Term Evolution Advanced (LTE-A) systems, Universal Mobile Telecommunication System (UMTS), Worldwide Interoperability for Microwave Access (WiMAX) systems, and 5G New Radio (NR) systems. These systems all include terminal devices and network devices. The systems may also include core network components, such as Evolved Packet System (EPS) and 5G System (5GS).

The terminal device involved in the embodiments of the present disclosure may refer to a device that provides voice and/or data connectivity to a user, such as a handheld device with wireless connectivity functionality or other processing devices connected to a wireless modem. In different systems, the terminal device may have different names. For example, in a 5G system, the terminal device may be referred to as User Equipment (UE). A wireless terminal device can communicate with one or more Core Networks (CN) through a Radio Access Network (RAN). The wireless terminal device can be a mobile terminal device, such as a mobile phone (also referred to as a "cellular" phone) or a computer equipped with a mobile terminal device. For instance, it may be a portable, handheld, built-in computer, or vehicle-mounted mobile device that exchanges voice and/or data with the RAN. Examples include Personal Communication Service (PCS) phones, cordless phones, Session Initiation Protocol (SIP) phones, Wireless Local Loop (WLL) stations, Personal Digital Assistants (PDAs), among others. Wireless terminal devices may also be referred to as systems, subscriber units, subscriber stations, mobile stations, mobiles, remote stations, access points, remote terminals, access terminals, user terminals, user agents, user devices, and so forth. The embodiments of the present disclosure do not impose limitations on these terms.

The network device involved in the embodiments of the present disclosure may refer to a base station, which can include multiple cells serving the terminals. Depending on the specific application scenario, the base station may also be referred to as an access point. It can be a device in the access network that communicates with wireless terminal devices through one or more sectors over the air interface or under other names. The network device can exchange received air frames with Internet Protocol (IP) packets, serving as a router between the wireless terminal device and the rest of the access network. The rest of the access network may include an IP communication network. The network device may also coordinate attribute management of the air interface. For instance, the network device involved in the embodiments of the present disclosure can be a Base Transceiver Station (BTS) in Global System for Mobile Communications (GSM) or Code Division Multiple Access (CDMA) systems, a NodeB in Wideband Code Division Multiple Access (WCDMA) systems, an evolved NodeB (eNB or e-NodeB) in Long Term Evolution (LTE) systems, or a 5G base station (gNB) in the 5G network architecture (next-generation system). It can also be a Home eNodeB (HeNB), relay node, femto base station, pico base station, etc. The embodiments of the present disclosure do not impose limitations on these terms. In some network structures, the network device may include a centralized unit (CU) node and a distributed unit (DU) node, and the centralized and distributed units can be geographically separated.

The network device and the terminal device may use one or more antennas to perform Multi-Input Multi-Output (MIMO) transmission. MIMO transmission can be Single User MIMO (SU-MIMO) or Multi-User MIMO (MU-MIMO). Based on the configuration and number of antenna arrays, MIMO transmission can be 2D MIMO (2-Dimensional MIMO), 3D MIMO (3-Dimensional MIMO), Full Dimension MIMO (FD-MIMO), or massive MIMO. It can also be diversity transmission, precoding transmission, or beamforming transmission, among others.

Corresponding to the implementation on the terminal device side, as shown in FIG. 4, the embodiments of the present disclosure also provide a reporting power headroom method, performed by the network device, including:

Step S401: receiving a power headroom report sent by the terminal device, wherein the power headroom report is sent to the network device by the terminal device when the transmission path type changes and the first condition is met; wherein the first condition includes: the terminal device has obtained uplink resources from the network device, and the uplink resources can carry the power headroom report; the transmission path types include: direct path and/or indirect path;

the direct path refers to the transmission path for direct communication between the terminal device and the network device, while the indirect path refers to the transmission path that requires relaying through a relay device for communication between the terminal device and the network device.

Optionally, the network device obtains the power headroom of the terminal device on the first target object through the power headroom report, wherein the power headroom report further includes at least one of the following:

the transmission path type corresponding to the power headroom reported for a first target object; the transmission power used by the direct communication interface corresponding to the indirect path of the terminal device on the first target object; the maximum transmission power allowed by the direct communication interface corresponding to the indirect path of the terminal device on the first target object; the maximum transmission power allowed for the terminal device on the direct path of the first target object. wherein the first target object includes one of the following: cell, carrier, or bandwidth part (BWP).

Optionally, the method further includes:

receiving terminal capability information sent by the terminal device; wherein the terminal capability information includes at least one of the following: indicating whether the terminal device supports multi-path transmission;

indicating whether the first target supports direct path and indirect path transmission, wherein the first target includes: a frequency band, a band combination, a cell, or different cells.

It should be noted that all descriptions regarding the network device in the above embodiments are applicable to the implementation of the reporting power headroom method and can achieve the same technical effects. This is not further detailed here.

As shown in FIG. 5, the embodiments of the present disclosure provide a reporting power headroom apparatus 500, which is applied to the terminal device and includes:

a triggering unit 501, configured to trigger the power headroom report when the transmission path type changes; wherein the transmission path types include: direct path and/or indirect path;

the direct path refers to the transmission path for direct communication between the terminal device and the network device, while the indirect path refers to the transmission path that requires relaying through a relay device for communication between the terminal device and the network device.

Optionally, the change in the transmission path type includes at least one of the following:

updating a direct path on the first cell;
updating an indirect path on the first cell;
updating a direct path on the terminal device;
updating an indirect path on the terminal device;
wherein the first cell includes at least one of the following: any cell configured for the terminal device, or any cell where the terminal device is currently in an activated state;
wherein the update includes at least one of the following: configuration, deconfiguration, activation, or deactivation.

Optionally, the power headroom calculation method included in the power headroom report comprises at least one of the following:

calculating the power headroom based on the first target object;
calculating the power headroom based on different transmission path types on the first target object;
wherein the first target object includes one of the following: cell, carrier, or bandwidth part (BWP);
the power headroom is determined based on the transmission power of the terminal device on the indirect path of the first target object.

Optionally, the implementation for calculating the power headroom based on the first target object includes:

determining the power headroom of the terminal device on the first target object based on the maximum transmission power allowed by the terminal device on the first target object, the transmission power of the terminal device on the direct path of the first target object, and the transmission power of the terminal device on the indirect path of the first target object;
wherein the transmission power of the terminal device on the indirect path of the first target object includes: the transmission power used by the direct communication interface corresponding to the indirect path of the terminal device on the first target object, or the maximum transmission power allowed by the direct communication interface corresponding to the indirect path of the terminal device on the first target object.

Optionally, the implementation for calculating the power headroom based on different transmission path types on the first target object includes:

determining, based on the first parameter and the transmission power of the terminal device on the indirect path of the first target object, the power headroom corresponding to the indirect path of the terminal device on the first target object;
determining, based on the second parameter and the transmission power of the terminal device on the direct path of the first target object, the power headroom corresponding to the direct path of the terminal device on the first target object;
wherein the transmission power of the terminal device on the indirect path of the first target object is the transmission power used by the direct communication interface corresponding to the indirect path of the terminal device on the first target object; the first parameter includes: the maximum transmission power allowed by the direct communication interface corresponding to the indirect path of the terminal device on the first target object, or the maximum transmission power allowed by the terminal device on the first target object; the second parameter includes: the maximum transmission power allowed for the terminal device on the direct path of the first target object, or the maximum transmission power allowed by the terminal device on the first target object.

Optionally, the method for determining the transmission power of the terminal device on the direct path of the first target object includes at least one of the following:

> determining based on the transmission power used for Physical Uplink Shared Channel (PUSCH) transmission on the direct path of the terminal device on the first target object;
> determining based on the transmission power used for PUSCH transmission and the transmission power used for Physical Uplink Control Channel (PUCCH) transmission on the direct path of the terminal device on the first target object;
> determining based on the transmission power used for Sounding Reference Signal (SRS) transmission on the direct path of the terminal device on the first target object.

Optionally, the method for determining the transmission power used by the direct communication interface corresponding to the indirect path of the terminal device on the first target object includes:
determining based on at least one of the transmission power used for Physical Sidelink Broadcast Channel (PSBCH) transmission, the transmission power used for Physical Sidelink Feedback Channel (PSFCH) transmission, the transmission power used for Physical Sidelink Shared Channel (PSSCH) transmission, and the transmission power used for Physical Sidelink Control Channel (PSCCH) transmission on the indirect path of the terminal device on the first target object.

Optionally, the method for determining the maximum transmission power allowed by the direct communication interface corresponding to the indirect path of the terminal device on the first target object includes at least one of the following:

> determining based on the percentage of the maximum transmission power allowed for the direct path or the maximum transmission power allowed by the direct communication interface corresponding to the indirect path to the maximum transmission power allowed by the terminal device on the first target object;
> determining based on the maximum transmission power allowed for the terminal device on the direct path of the first target object;
> determining based on protocol agreements, pre-configuration, or network device configuration.

Optionally, after the triggering unit 501 triggers the power headroom report, further comprising:

> a first reporting unit, configured to report the power headroom when the first condition is satisfied, wherein the power headroom is carried in the power headroom report;
> wherein the first condition includes: the terminal device has obtained uplink resources from the network device, and the uplink resources can carry the power headroom report.

Optionally, the first reporting unit is configured to implement at least one of the following:

> reporting the power headroom of the terminal device on all first target objects in an activated state;
> reporting the power headroom of the terminal device on first target objects that have direct paths and are in an activated state.

Optionally, the implementation for reporting the power headroom of the terminal device on the first target object includes at least one of the following:

> reporting only one power headroom corresponding to the first target object for a first target object;
> reporting power headrooms separately according to different transmission path types under the first target object for a first target object.

Optionally, the terminal device transmits the power headroom of the terminal device on the first target object through the power headroom report, wherein the power headroom report further includes at least one of the following:

> the transmission path type corresponding to the power headroom reported for a first target object;
> the transmission power used by the direct communication interface corresponding to the indirect path of the terminal device on the first target object;

the maximum transmission power allowed by the direct communication interface corresponding to the indirect path of the terminal device on the first target object;

the maximum transmission power allowed for the terminal device on the direct path of the first target object.

Optionally, the device further includes:

a second reporting unit, configured to report terminal capability information;

wherein the terminal capability information includes at least one of the following:

indicating whether the terminal device supports multi-path transmission;

indicating whether the first target supports direct path and indirect path transmissions, wherein the first target includes: a frequency band, a frequency band combination, a cell, or different cells.

It should be noted that this device embodiment corresponds one-to-one with the method embodiments described above. All implementations of the method embodiments are applicable to this device embodiment and can achieve the same technical effects, and thus, are not redundantly described here.

It should be noted that the division of units in this embodiment is illustrative and merely represents one logical functional division. During actual implementation, other division methods may be used. Furthermore, the functional units described in the various embodiments of this disclosure can be integrated into one processing unit, can physically exist as separate units, or can be integrated into one or more units. The integrated unit can be implemented in the form of hardware or software functional units.

If the integrated unit is implemented as a software functional unit and sold or used as a standalone product, it can be stored on a processor-readable storage medium. Based on this understanding, the technical solutions provided in this disclosure, or the essential parts of the contribution to the prior art, or all or part of the technical solutions, can be embodied in the form of a software product. This computer software product is stored in a storage medium and includes instructions for causing a computer device (such as a personal computer, server, or network device) or processor to execute all or part of the steps described in the embodiments of this disclosure. The storage medium can include: USB drives, portable hard drives, Read-Only Memory (ROM), Random Access Memory (RAM), magnetic disks, optical disks, or other media capable of storing program codes.

As shown in FIG. 6, this disclosure further provides a terminal device, including a processor 600, a transceiver 610, a memory 620, and a program stored in memory 620 and executable on processor 600. The transceiver 610 is connected to the processor 600 and memory 620 via a bus interface, wherein: the processor 600 is configured to read the program in memory and execute the following processes:

triggering a power headroom report when a transmission path type change occurs;

wherein the transmission path type includes: direct path and/or indirect path;

the direct path is a transmission path for direct communication between the terminal device and the network device, and the indirect path is a transmission path that requires relay via a relay device for communication between the terminal device and the network device.

The transceiver 610 is used to receive and send data under the control of processor 600.

As shown in FIG. 6, the bus architecture can include any number of interconnected buses and bridges, specifically linking various circuits such as those represented by processor 600 and memory 620. The bus architecture can also link various other circuits such as peripherals, regulators, and power management circuits, which are well known in the art and therefore not described further here. The bus interface provides connectivity. The transceiver 610 can consist of multiple elements, including a transmitter and a receiver, and serves as a unit for communication with various other devices over transmission media, including wireless channels, wired channels, optical cables, and other transmission media. For different user devices, the user interface 630 can also be an interface capable of connecting external or internal devices, including but not limited to keypads, displays, speakers, microphones, joysticks, etc.

The processor 600 is responsible for managing the bus architecture and general processing, while memory 620 can store data used by processor 600 during operations.

Optionally, the processor 600 can be a Central Processing Unit (CPU), an Application-Specific Integrated Circuit (ASIC), a Field-Programmable Gate Array (FPGA), or a Complex Programmable Logic Device (CPLD). The processor may also adopt a multi-core architecture.

The processor executes any of the methods provided by the embodiments of the present disclosure by invoking the computer program stored in the memory, and the processor and the memory may also be physically arranged separately.

Further, the transmission path type change includes at least one of the following:

updating a direct path on a first cell;
updating an indirect path on a first cell;
updating a direct path by the terminal device;
updating an indirect path by the terminal device;
wherein the first cell includes at least one of: any cell configured for the terminal device, or any cell in which the terminal device is currently in an active state;
the updating includes at least one of: configuration, de-configuration, activation, or deactivation.

Further, the calculation method of the power headroom included in the power headroom report comprises at least one of the following:

calculating power headroom based on the first target object;
calculating power headroom based on different transmission path types of the first target object;
wherein the first target object includes one of the following: a cell, a carrier, or a bandwidth part (BWP);
the power headroom is determined based on the transmission power of the terminal device on the indirect path of the first target object.

Further, the processor reads the computer program stored in the memory to execute the following operations:

determining the power headroom of the terminal device on the first target object based on the maximum transmission power allowed by the terminal device on the first target object, the transmission power of the terminal device on the direct path of the first target object, and the transmission power of the terminal device on the indirect path of the first target object;
wherein the transmission power of the terminal device on the indirect path of the first target object includes: the transmission power used by the direct communication interface corresponding to the indirect path of the terminal device on the first target object, or the maximum transmission power allowed by the direct communication interface corresponding to the indirect path of the terminal device on the first target object.

Further, the processor reads the computer program stored in the memory to execute the following operations:

determining the power headroom corresponding to the indirect path of the terminal device on the first target object based on the first parameter and the transmission power of the terminal device on the indirect path of the first target object;
determining the power headroom corresponding to the direct path of the terminal device on the first target object based on the second parameter and the transmission power of the terminal device on the direct path of the first target object;
wherein the transmission power of the terminal device on the indirect path of the first target object is the transmission power used by the direct communication interface corresponding to the indirect path of the terminal device on the first target object; the first parameter includes: the maximum transmission power allowed by the direct communication interface corresponding to the indirect path of the terminal device on the first target object, or the maximum transmission power allowed by the terminal device on the first target object; and the second parameter includes: the maximum transmission power allowed for the terminal device on the direct path of the first target object, or the maximum transmission power allowed by the terminal device on the first target object.

Further, the determination method for the transmission power of the terminal device on the direct path of the first target object includes at least one of the following:

determining based on the transmission power used by the physical uplink shared channel (PUSCH) on the direct path of the terminal device on the first target object;
determining based on the transmission power used by the PUSCH and the physical uplink control channel (PUCCH) on the direct path of the terminal device on the first target object;
determining based on the transmission power used by the sounding reference signal (SRS) on the direct path of the terminal device on the first target object.

Further, the determination method for the transmission power used by the direct communication interface corresponding to the indirect path of the terminal device on the first target object includes:
determining based on at least one of the following: the transmission power used by the physical sidelink broadcast channel (PSBCH), the physical sidelink feedback channel (PSFCH), the physical sidelink shared channel (PSSCH), or the physical sidelink control channel (PSCCH) on the indirect path of the terminal device on the first target object.

Further, the method for determining the maximum transmission power allowed by the direct communication interface corresponding to the indirect path of the terminal device on the first target object includes at least one of the following:

determining based on the percentage of the maximum transmission power allowed for the terminal device on the direct path of the first target object or the maximum transmission power allowed by the direct communication interface corresponding to the indirect path of the terminal device on the first target object in the maximum transmission power allowed by the terminal device on the first target object;

determining based on the maximum transmission power allowed for the terminal device on the direct path of the first target object;

determining based on protocol agreement, pre-configuration, or network device configuration.

Further, the processor is configured to read the computer program stored in the memory and perform at least one of the following operations:

reporting the power headroom when the first condition is met, wherein the power headroom is carried in the power headroom report;

wherein the first condition includes: the terminal device has obtained uplink resources from the network device, and the uplink resources can carry the power headroom report.

Further, the processor is configured to read the computer program stored in the memory and perform at least one of the following operations:

reporting the power headroom of the terminal device on all the first target objects in the activated state;

reporting the power headroom of the terminal device on the first target objects that have a direct path and are in the activated state.

Further, the processor is configured to read the computer program stored in the memory and perform at least one of the following operations:

reporting only one power headroom corresponding to a first target object;

reporting the power headroom for a first target object based on different transmission path types of the first target object.

Further, the terminal device transmits the power headroom of the terminal device on the first target object through the power headroom report, and the power headroom report further includes at least one of the following:

the transmission path type corresponding to the power headroom reported for a first target object;

the transmission power used by the direct communication interface corresponding to the indirect path of the terminal device on the first target object;

the maximum transmission power allowed by the direct communication interface corresponding to the indirect path of the terminal device on the first target object;

the maximum transmission power allowed for the terminal device on the direct path of the first target object.

Further, the processor is configured to read the computer program stored in the memory and perform at least one of the following operations:

reporting the terminal capability information through the transceiver;

wherein the terminal capability information includes at least one of the following:

indicating whether the terminal device supports multi-path transmission;

indicating whether the terminal device supports direct path and indirect path transmission on the first target, wherein the first target includes: a frequency band, a band combination, a cell, or different cells.

It should be noted that the terminal device provided by the embodiment of the present disclosure can achieve all the method steps implemented by the above method embodiments and achieve the same technical effects. Therefore, parts of the implementation of the terminal device that are the same as those of the method embodiment and their beneficial effects are not specifically described here.

The present disclosure also provides a computer-readable storage medium, on which a computer program is stored. The computer program, when performed by a processor, implements the steps of the reporting power headroom method applied to the terminal device. The processor-readable storage medium may be any accessible medium or data storage device that the processor can access, including but not limited to magnetic storage media (e.g., floppy disks, hard drives, magnetic tapes, magneto-optical disks), optical storage media (e.g., compact disks, digital video discs, Blu-ray discs, high-definition versatile discs), and semiconductor storage media (e.g., ROM, EPROM, EEPROM, non-volatile memory such as NAND FLASH, and solid-state drives).

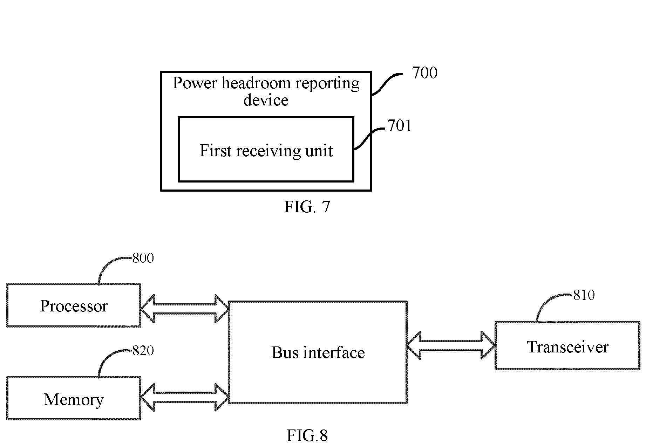

As shown in FIG. 7, the present disclosure provides a reporting power headroom device 700, which is applied to network equipment and includes:

a first receiving unit 701, configured to receive a power headroom report sent by a terminal device, wherein the power headroom report is sent to the network equipment when the transmission path type of the terminal device changes and the first condition is met;

wherein the first condition includes: the terminal device has obtained uplink resources from the network equipment, and the uplink resources can carry the power headroom report; the transmission path type includes: direct path and/or indirect path;

the direct path is a transmission path for direct communication between the terminal device and the network equipment, and the indirect path is a transmission path that requires relay via a relay device for communication between the terminal device and the network equipment.

Optionally, the network equipment obtains the power headroom of the terminal device on the first target object through the power headroom report, and the power headroom report further includes at least one of the following:

the transmission path type corresponding to the power headroom reported for a first target object;

the transmission power used by the direct communication interface corresponding to the indirect path of the terminal device on the first target object;

he maximum transmission power allowed by the direct communication interface corresponding to the indirect path of the terminal device on the first target object;

the maximum transmission power allowed for the terminal device on the direct path of the first target object;

wherein the first target object includes one of the following: cell, carrier, bandwidth part (BWP).

Optionally, the device further includes:

a second receiving unit, configured to receive terminal capability information sent by the terminal device;

wherein the terminal capability information includes at least one of the following:

indicating whether the terminal device supports multi-path transmission;

indicating whether the terminal device supports direct path and indirect path transmission on the first target, wherein the first target includes: a frequency band, a band combination, a cell, or different cells.

It should be noted that this device embodiment corresponds one-to-one with the method embodiment described above, and all the implementations in the method embodiment are applicable to the device embodiment, achieving the same technical effects.

It should be noted that the division of units in the present disclosure is illustrative and represents only a logical division of functions. In practical implementations, other division methods may be adopted. In addition, in the various embodiments of the present disclosure, the functional units may be integrated into a processing unit, may exist separately as individual physical entities, or may be integrated into two or more units. The integrated units may be implemented in the form of hardware or as software functional units.

If the integrated unit is implemented in the form of software functional units and is sold or used as an independent product, it may be stored in a processor-readable storage medium. Based on this understanding, the technical solution of the present disclosure or the parts that contribute to the existing technology may be embodied in the form of a software product. This computer software product is stored in a storage medium and includes several instructions to enable a computer device (such as a personal computer, server, or network device) or processor to execute all or part of the steps of the methods described in the embodiments of the present disclosure. The aforementioned storage medium includes: USB drives, mobile hard drives, read-only memory (ROM), random access memory (RAM), magnetic disks, optical disks, or other media capable of storing program codes.

As shown in FIG. 8, the present disclosure further provides a network device, which includes a processor 800, a transceiver 810, a memory 820, and a program stored in the memory 820 that can run on the processor 800; wherein the transceiver 810 is connected to the processor 800 and the memory 820 via a bus interface. The processor 800 is configured to read the program in the memory and execute the following process:

receiving, through the transceiver 810, a power headroom report sent by the terminal device, wherein the power headroom report is sent to the network equipment when the transmission path type of the terminal device changes and the first condition is met;

wherein the first condition includes: the terminal device has obtained uplink resources from the network equipment, and the uplink resources can carry the power headroom report; the transmission path type includes: direct path and/or indirect path;

the direct path refers to a transmission path for direct communication between the terminal device and the network equipment, while the indirect path refers to a transmission path that requires relay via a relay device for communication between the terminal device and the network device.

The transceiver 810 is configured to receive and send data under the control of the processor 800.

As shown in FIG. 8, the bus architecture may include any number of interconnected buses and bridges, specifically linking the circuits represented by the processor 800 and the memory 820. The bus architecture may also link various other circuits, such as peripheral devices, voltage regulators, and power management circuits, which are well-known in the art and therefore not further described herein. The bus interface provides an interface. The transceiver 810 may consist of multiple components, including a transmitter and a receiver, and provides units for communicating with various other devices over transmission media, including wireless channels, wired channels, and optical cables.

The processor 800 is responsible for managing the bus architecture and general processing, while the memory 820 can store data used by the processor 800 during operation.

Optionally, the processor 800 may be a Central Processing Unit (CPU), an Application-Specific Integrated Circuit (ASIC), a Field-Programmable Gate Array (FPGA), or a Complex Programmable Logic Device (CPLD), and it may adopt a multi-core architecture.

The processor executes the computer program stored in the memory to perform any of the methods provided in the embodiments of this disclosure according to the executable instructions obtained. The processor and the memory may also be physically arranged separately.

Furthermore, the network equipment obtains the power headroom of the terminal device on the first target object through the power headroom report, and the power headroom report further includes at least one of the following:

the transmission path type corresponding to the power headroom reported for a first target object;

the transmission power used by the direct communication interface corresponding to the indirect path of the terminal device on the first target object;

the maximum transmission power allowed by the direct communication interface corresponding to the indirect path of the terminal device on the first target object;

the maximum transmission power allowed for the terminal device on the direct path of the first target object;

wherein, the first target object includes one of the following: a cell, a carrier, or a bandwidth part (BWP).

Furthermore, the processor is configured to execute the computer program stored in the memory and perform the following operations:

receiving terminal capability information sent by the terminal device via the transceiver;

wherein, the terminal capability information includes at least one of the following:

indicating whether the terminal device supports multi-path transmission;

indicating whether the terminal device supports direct path and indirect path transmission on the first target, wherein the first target includes: a frequency band, a band combination, a cell, or different cells.

It should be noted that the network equipment provided by this embodiment of the present disclosure can implement all the method steps realized by the method embodiments described above and achieve the same technical effects. Therefore, the identical parts of the implementation in this embodiment and the method embodiments, as well as their advantages, are not specifically described again here.

The present disclosure further provides a computer-readable storage medium on which a computer program is stored. When performed by a processor, the computer program implements the steps of the reporting power headroom method applied to network equipment. The processor-readable storage medium may be any available medium or data storage device accessible by the processor, including but not limited to magnetic storage (e.g., floppy disks, hard disks, magnetic tapes, magneto-optical disks (MO), etc.), optical storage (e.g., CDs, DVDs, BDs, HVDs, etc.), and semiconductor storage (e.g., ROM, EPROM, EEPROM, non-volatile memory (NAND FLASH), solid-state drives (SSD), etc.).

Those skilled in the art should understand that the embodiments of the present disclosure may be provided as methods, systems, or computer program products. Therefore, the present disclosure may take the form of an entirely hardware implementation, an entirely software implementation, or an implementation combining software and hardware.

Moreover, the present disclosure may take the form of a computer program product implemented on one or more computer-readable storage media containing computer-usable program code.

The present disclosure is described with reference to flowcharts and/or block diagrams of methods, apparatuses (systems), and computer program products according to embodiments of the present disclosure. It should be understood that each flow and/or block in the flowcharts and/or block diagrams, as well as combinations of flows and/or blocks in the flowcharts and/or block diagrams, can be implemented by computer-executable instructions. These computer-executable instructions can be provided to a general-purpose computer, special-purpose computer, embedded processor, or other programmable data processing device processor to produce a machine such that instructions performed by the processor of the computer or other programmable data processing device produce devices for implementing the functions specified in one or more flows or blocks in the flowcharts or block diagrams.

These processor-executable instructions can also be stored in a processor-readable memory that directs a computer or other programmable data processing device to operate in a specific manner, such that the instructions stored in the processor-readable memory produce an article of manufacture that includes instruction means for implementing the functions specified in one or more flows in the flowchart and/or one or more blocks in the block diagram.

These processor-executable instructions can also be loaded onto a computer or other programmable data processing device, such that a series of operational steps are performed on the computer or other programmable device to produce a computer-implemented process. Consequently, the instructions performed on the computer or other programmable device provide steps for implementing the functions specified in one or more flows in the flowchart and/or one or more blocks in the block diagram.

It is evident that those skilled in the art can make various modifications and variations to the present disclosure without departing from the spirit and scope of the present disclosure. Accordingly, if such modifications and variations of the present disclosure fall within the scope of the claims of the present disclosure and their equivalents, the present disclosure is intended to include these modifications and variations.

**Claims**

1. A method for reporting power headroom, performed by a terminal, the method comprising:

   triggering a power headroom report when a transmission path type changes;
   wherein the transmission path type comprises: a direct path and/or an indirect path;
   the direct path is a transmission path for direct communication between the terminal and the network, and the indirect path is a transmission path requiring relay via a relay for communication between the terminal and the network.

2. The method according to claim 1, wherein the change of the transmission path type comprises at least one of the following:

   updating a direct path on a first cell;
   updating an indirect path on a first cell;
   updating a direct path by the terminal;
   updating an indirect path by the terminal;
   wherein the first cell comprises at least one of the following: any cell configured for the terminal, or any cell currently in an active state for the terminal;
   the updating comprises at least one of the following: configuration, deconfiguration, activation, deactivation.

3. The method according to claim 1, wherein the calculation method for the power headroom comprised in the power headroom report comprises at least one of the following:

   calculating the power headroom based on a first target object;
   calculating the power headroom based on different transmission path types in the first target object;
   wherein the first target object comprises at least one of the following: cell, carrier, or a bandwidth part (BWP);
   the power headroom is determined based on the transmission power of the terminal on an indirect path of the first target object.

4. The method according to claim 3, wherein the calculating the power headroom based on the first target object comprises:
   determining the power headroom of the terminal on the first target object according to:

a maximum transmission power allowed for the terminal on the first target object,
a transmission power of the terminal on the direct path of the first target object, and
a transmission power of the terminal on the indirect path of the first target object;
wherein the transmission power of the terminal on the indirect path of the first target object comprises: a transmission power used by the direct communication interface corresponding to the indirect path on the first target object, or a maximum transmission power allowed for the direct communication interface corresponding to the indirect path on the first target object.

5. The method according to claim 3, wherein the calculation of the power headroom based on different transmission path types in the first target object comprises:

determining the power headroom corresponding to the indirect path of the terminal on the first target object based on a first parameter and the transmission power of the terminal on the indirect path of the first target object;
determining the power headroom corresponding to the direct path of the terminal on the first target object based on a second parameter and the transmission power of the terminal on the direct path of the first target object;
wherein the transmission power of the terminal on the indirect path of the first target object is the transmission power used by the direct communication interface corresponding to the indirect path on the first target object;
the first parameter comprises: a maximum transmission power allowed by the direct communication interface corresponding to the indirect path on the first target object, or a maximum transmission power allowed for the terminal on the first target object;
the second parameter comprises: a maximum transmission power allowed for the direct path on the first target object, or a maximum transmission power allowed for the terminal on the first target object.

6. The method according to claim 4 or 5, wherein the determination of the transmission power of the terminal on the direct path of the first target object comprises at least one of the following:

determining based on the transmission power used for physical uplink shared channel (PUSCH) transmission on the direct path of the terminal on the first target object;
determining based on the transmission power used for PUSCH transmission and the transmission power used for physical uplink control channel (PUCCH) transmission on the direct path of the terminal on the first target object;
determining based on the transmission power used for sounding reference signal (SRS) transmission on the direct path of the terminal on the first target object.

7. The method according to claim 4 or 5, wherein the determination of the transmission power used by the direct communication interface corresponding to the indirect path of the terminal on the first target object comprises:
determining based on at least one of the following transmission powers on the indirect path on the first target object: physical sidelink broadcast channel (PSBCH) transmission power, physical sidelink feedback channel (PSFCH) transmission power, physical sidelink shared channel (PSSCH) transmission power, and physical sidelink control channel (PSCCH) transmission power.

8. The method according to claim 4 or 5, wherein the determination of the maximum transmission power allowed by the direct communication interface corresponding to the indirect path of the terminal on the first target object comprises at least one of the following:

determining based on the maximum transmission power allowed for the terminal on the direct path of the first target object or the maximum transmission power allowed by the direct communication interface corresponding to the indirect path on the first target object as a percentage of the maximum transmission power allowed for the terminal on the first target object;
determining based on the maximum transmission power allowed for the terminal on the direct path of the first target object;
determining based on protocol agreement, pre-configuration, or network configuration.

9. The method according to any one of claims 1 to 5, further comprising:

reporting the power headroom after triggering the power headroom report, provided that a first condition is satisfied, wherein the power headroom is carried in the power headroom report;
wherein the first condition comprises: the terminal has obtained uplink resources from the network, and the uplink resources are capable of carrying the power headroom report.

10. The method according to claim 9, wherein the reporting of the power headroom comprises at least one of the following:

reporting the power headroom of the terminal in all first target objects that are in an active state;
reporting the power headroom of the terminal in the first target objects that have a direct path and are in an active state.

11. The method according to claim 10, wherein the reporting of the power headroom of the terminal in the first target object comprises at least one of the following:

reporting only one power headroom corresponding to the first target object;
reporting the power headroom for a first target object according to different transmission path types under the first target object.

12. The method according to claim 10, wherein the terminal transmits the power headroom of the first target object through the power headroom report, and the power headroom report further comprises at least one of the following:

the transmission path type corresponding to the power headroom reported for the first target object;
the transmission power used by the direct communication interface corresponding to the indirect path on the first target object;
the maximum transmission power allowed by the direct communication interface corresponding to the indirect path on the first target object;
the maximum transmission power allowed for the terminal on the direct path of the first target object.

13. The method according to claim 1, further comprising:

reporting terminal capability information;
wherein the terminal capability information comprises at least one of the following:

an indication of whether the terminal supports multipath transmission;
an indication of whether the first target supports both direct path and indirect path transmission, wherein the first target comprises: a frequency band, a frequency band combination, a cell, or different cells.

14. A method for reporting power headroom, performed by a network, comprising:

receiving a power headroom report transmitted by a terminal, wherein the power headroom report is transmitted to the network by the terminal when the transmission path type changes and the first condition is satisfied;
wherein the first condition comprises: the terminal obtains uplink resources from the network, and the uplink resources are capable of carrying the power headroom report;
wherein the transmission path type comprises: a direct path and/or an indirect path;
wherein the direct path is a transmission path for direct communication between the terminal and the network, and the indirect path is a transmission path requiring relay via a relay for communication between the terminal and the network.

15. The method according to claim 14, wherein the network obtains the power headroom of the terminal in the first target object through the power headroom report, and the power headroom report further comprises at least one of the following:

the transmission path type corresponding to the power headroom reported for a first target object;
the transmission power used by the direct communication interface corresponding to the indirect path on the first target object;
the maximum transmission power allowed by the direct communication interface corresponding to the indirect path on the first target object;
the maximum transmission power allowed for the terminal on the direct path of the first target object;
wherein the first target object comprises: a cell, a carrier, or a bandwidth part (BWP).

16. The method according to claim 14, further comprising:

receiving terminal capability information sent by the terminal;

wherein the terminal capability information comprises at least one of the following:

an indication of whether the terminal supports multipath transmission;
an indication of whether the first target supports both direct path and indirect path transmission, wherein the first target comprises: a frequency band, a frequency band combination, a cell, or different cells.

17. A terminal device, comprising:

a memory, a transceiver, and a processor;
wherein the memory is configured to store a computer program;
the transceiver is configured to transmit and receive data under the control of the processor;
the processor is configured to read the computer program from the memory and perform the following operations:

triggering a power headroom report when the transmission path type changes;
wherein the transmission path type comprises: a direct path and/or an indirect path;
wherein the direct path is a transmission path for direct communication between the terminal device and the network device, and the indirect path is a transmission path requiring relay via a relay device for communication between the terminal device and the network device.

18. The terminal device according to claim 17, wherein the change in the transmission path type comprises at least one of the following:

updating a direct path on a first cell;
updating an indirect path on a first cell;
updating a direct path by the terminal device;
updating an indirect path by the terminal device;
wherein the first cell comprises at least one of the following: any cell configured for the terminal device, or any cell currently in an active state for the terminal device;
wherein the update comprises at least one of the following: configuration, deconfiguration, activation, or deactivation.

19. The terminal device according to claim 17, wherein the power headroom report comprises power headroom calculation methods, including at least one of the following:

calculating the power headroom based on a first target object;
calculating the power headroom based on different transmission path types under the first target object;
wherein the first target object comprises at least one of the following: a cell, a carrier, or a bandwidth part (BWP);
wherein the power headroom is determined based on the transmission power of the terminal device on the indirect path of the first target object.

20. The terminal device according to claim 19, wherein the processor is further configured to read the computer program from the memory and perform the following operations:

determining the power headroom of the terminal device on the first target object based on the maximum transmission power allowed for the terminal device on the first target object, the transmission power of the terminal device on the direct path of the first target object, and the transmission power of the terminal device on the indirect path of the first target object;
wherein the transmission power of the terminal device on the indirect path of the first target object comprises: the transmission power used by the direct communication interface corresponding to the indirect path of the terminal device in the first target object, or the maximum transmission power allowed by the direct communication interface corresponding to the indirect path of the terminal device in the first target object.

21. The terminal device according to claim 19, wherein the processor is further configured to read the computer program from the memory and perform the following operations:

determining the power headroom corresponding to the indirect path of the terminal device in the first target object based on a first parameter and the transmission power of the terminal device on the indirect path of the first target object;

determining the power headroom corresponding to the direct path of the terminal device in the first target object based on a second parameter and the transmission power of the terminal device on the direct path of the the first target object;

wherein the transmission power of the terminal device on the indirect path of the first target object is the transmission power used by the direct communication interface corresponding to the indirect path of the terminal device in the first target object; the first parameter comprises: the maximum transmission power allowed by the direct communication interface corresponding to the indirect path of the terminal device in the first target object, or the maximum transmission power allowed for the terminal device in the first target object; the second parameter comprises: the maximum transmission power allowed for the direct path of the terminal device in the first target object, or the maximum transmission power allowed for the terminal device in the first target object.

22. The terminal device according to claim 20 or 21, wherein the transmission power of the terminal device on the direct path of the first target object is determined by at least one of the following:

determining the transmission power used for the physical uplink shared channel (PUSCH) of the direct path on the first target object;
determining the transmission power based on the transmission power used for the PUSCH and the transmission power used for the physical uplink control channel (PUCCH) of the direct path on the first target object;
determining the transmission power based on the transmission power used for the sounding reference signal (SRS) of the direct path on the first target object.

23. The terminal device according to claim 20 or 21, wherein the transmission power used by the direct communication interface corresponding to the indirect path of the terminal device in the first target object is determined by at least one of the following:
determining the transmission power based on the transmission power used for the physical sidelink broadcast channel (PSBCH), the physical sidelink feedback channel (PSFCH), the physical sidelink shared channel (PSSCH), and the physical sidelink control channel (PSCCH) of the indirect path on the first target object.

24. The terminal device according to claim 20 or 21, wherein the maximum transmission power allowed by the direct communication interface corresponding to the indirect path of the terminal device in the first target object is determined by at least one of the following:

determining the maximum transmission power based on the percentage of the maximum transmission power allowed for the direct path or the maximum transmission power allowed for the indirect path of the terminal device in the first target object relative to the maximum transmission power allowed for the terminal device in the first target object;
determining the maximum transmission power based on the maximum transmission power allowed for the direct path of the terminal device in the first target object;
determining the maximum transmission power based on protocol agreement, pre-configuration, or network device configuration.

25. The terminal device according to any of claims 17-21, wherein the processor is further configured to read the computer program from the memory and perform at least one of the following operations:

reporting the power headroom when a first condition is met, wherein the power headroom is carried in the power headroom report;
wherein the first condition comprises: the terminal device has obtained uplink resources from the network device, and the uplink resources can carry the power headroom report.

26. The terminal device according to claim 25, wherein the processor is further configured to read the computer program from the memory and perform at least one of the following operations:

reporting the power headroom of the terminal device for all activated first target objects;
reporting the power headroom of the terminal device for first target objects with direct paths in an active state.

27. The terminal device according to claim 26, wherein the processor is further configured to read the computer program from the memory and perform at least one of the following operations:

reporting a single power headroom corresponding to the first target object;
reporting power headroom separately for different transmission path types under the first target object.

28. The terminal device according to claim 26, wherein the terminal device transmits the power headroom of the terminal device in the first target object through the power headroom report, and the power headroom report further comprises at least one of the following:

the transmission path type corresponding to the reported power headroom for the first target object;
the transmission power used by the direct communication interface corresponding to the indirect path of the terminal device in the first target object;
the maximum transmission power allowed by the direct communication interface corresponding to the indirect path of the terminal device in the first target object;
the maximum transmission power allowed for the direct path of the terminal device in the first target object.

29. The terminal device according to claim 17, wherein the processor is further configured to read the computer program from the memory and perform at least one of the following operations:

reporting terminal capability information through the transceiver;
wherein the terminal capability information comprises at least one of the following:

indicating whether the terminal device supports multi-path transmission;
indicating whether direct path and indirect path transmission are supported in the first target object, wherein the first target object comprises: a frequency band, a band combination, a cell, or different cells.

30. A network device, comprising a memory, a transceiver, and a processor:

the memory is configured to store a computer program;
the transceiver is configured to transmit and receive data under the control of the processor;
the processor is configured to read the computer program from the memory and perform the following operations:

receiving, through the transceiver, a power headroom report reported by a terminal device, wherein the power headroom report is sent to the network device by the terminal device when a transmission path type changes and a first condition is satisfied;
wherein the first condition comprises: the terminal device has obtained uplink resources from the network device, and the uplink resources can carry the power headroom report;
wherein the transmission path type comprises: a direct path and/or an indirect path;
wherein the direct path is a transmission path for direct communication between the terminal device and the network device, and the indirect path is a transmission path requiring relay by a relay device for communication between the terminal device and the network device.

31. The network device according to claim 30, wherein the network device obtains the power headroom of the terminal device in the first target object through the power headroom report, and the power headroom report further comprises at least one of the following:

the transmission path type corresponding to the reported power headroom for the first target object;
the transmission power used by the direct communication interface corresponding to the indirect path of the terminal device in the first target object;
the maximum transmission power allowed by the direct communication interface corresponding to the indirect path of the terminal device in the first target object;
the maximum transmission power allowed for the direct path of the terminal device in the first target object;
wherein the first target object comprises: a cell, a carrier, or a bandwidth part (BWP).

32. The network device according to claim 30, wherein the processor is further configured to read the computer program from the memory and perform the following operations:

receiving, through the transceiver, terminal capability information sent by the terminal device;
wherein the terminal capability information comprises at least one of the following:

indicating whether the terminal device supports multi-path transmission;
indicating whether direct path and indirect path transmission are supported in the first target object, wherein the first target object comprises: a frequency band, a band combination, a cell, or different cells.

33. A reporting power headroom device applied to a terminal device, comprising:

a triggering unit, configured to trigger a power headroom report when a transmission path type changes;
wherein the transmission path type comprises: a direct path and/or an indirect path;
wherein the direct path is a transmission path for direct communication between the terminal device and the network device, and the indirect path is a transmission path requiring relay by a relay device for communication between the terminal device and the network device.

34. The device according to claim 33, wherein the transmission path type change comprises at least one of the following:

updating a direct path on the first cell;
updating an indirect path on the first cell;
updating a direct path on the terminal device;
updating an indirect path on the terminal device;
wherein the first cell comprises at least one of the following: any cell configured for the terminal device, any cell in which the terminal device is currently in an active state;
wherein the updating comprises at least one of the following: configuration, deconfiguration, activation, deactivation.

35. The device according to claim 33, wherein the method of calculating the power headroom comprised in the power headroom report comprises at least one of the following:

calculating the power headroom based on a first target object;
calculating the power headroom based on different transmission path types in the first target object;
wherein the first target object comprises one of the following: a cell, a carrier, a bandwidth part (BWP);
wherein the power headroom is determined based on the transmission power of the terminal device on the indirect path of the first target object.

36. The device according to claim 35, wherein calculating the power headroom based on the first target object comprises:

determining the power headroom of the terminal device in the first target object based on the maximum transmission power allowed for the terminal device in the first target object, the transmission power of the terminal device on the direct path of the first target object, and the transmission power of the terminal device on the indirect path of the first target object;
wherein the transmission power of the terminal device on the indirect path of the first target object comprises: the transmission power used by the direct communication interface corresponding to the indirect path on the first target object of the terminal device, or the maximum transmission power allowed by the direct communication interface corresponding to the indirect path on the first target object of the terminal device.

37. The device according to claim 35, wherein calculating the power headroom based on different transmission path types in the first target object comprises:

determining the power headroom corresponding to the indirect path of the terminal device in the first target object based on a first parameter and the transmission power of the terminal device on the indirect path of the first target object;
determining the power headroom corresponding to the direct path of the terminal device in the first target object based on a second parameter and the transmission power of the terminal device on the direct path of the first target object;
wherein the transmission power of the terminal device on the indirect path of the first target object is the transmission power used by the direct communication interface corresponding to the indirect path on the first target object of the terminal device;
wherein the first parameter comprises: the maximum transmission power allowed by the direct communication interface corresponding to the indirect path on the first target object of the terminal device, or the maximum transmission power allowed for the terminal device in the first target object;

wherein the second parameter comprises: the maximum transmission power allowed for the direct path of the terminal device in the first target object, or the maximum transmission power allowed for the terminal device in the first target object.

38. The device according to claim 36 or 37, wherein the method of determining the transmission power of the terminal device on the direct path of the first target object comprises at least one of the following:

   determining the transmission power based on the transmission power used by the physical uplink shared channel (PUSCH) on the direct path on the first target object of the terminal device;
   determining the transmission power based on the transmission power used by the PUSCH on the direct path and the transmission power used by the physical uplink control channel (PUCCH) on the direct path on the first target object of the terminal device;
   determining the transmission power based on the transmission power used by the sounding reference signal (SRS) on the direct path on the first target object of the terminal device.

39. The device according to claim 36 or 37, wherein the method of determining the transmission power used by the direct communication interface corresponding to the indirect path on the first target object of the terminal device comprises: determining the transmission power based on at least one of the following: the transmission power used by the physical sidelink broadcast channel (PSBCH) on the indirect path on the first target object of the terminal device, the transmission power used by the physical sidelink feedback channel (PSFCH) on the indirect path, the transmission power used by the physical sidelink shared channel (PSSCH) on the indirect path, and the transmission power used by the physical sidelink control channel (PSCCH) on the indirect path.

40. The device according to claim 36 or 37, wherein the method for determining the maximum transmission power allowed by the direct communication interface corresponding to the indirect path of the terminal device in the first target object comprises at least one of the following:

   determining based on the maximum transmission power allowed for the terminal device on the direct path of the first target object or the percentage of the maximum transmission power allowed by the direct communication interface corresponding to the indirect path on the total maximum transmission power allowed for the terminal device in the first target object;
   determining based on the maximum transmission power allowed for the terminal device on the direct path of the first target object;
   determining based on protocol agreement, pre-configuration, or network device configuration.

41. The device according to any one of claims 33 to 37, further comprising:

   a first reporting unit, configured to report the power headroom when a first condition is satisfied, wherein the power headroom is carried in the power headroom report;
   wherein the first condition comprises: the terminal device has obtained uplink resources from the network device, and the uplink resources can carry the power headroom report.

42. The device according to claim 41, wherein the first reporting unit is configured to implement at least one of the following:

   reporting the power headroom of the terminal device in all activated first target objects;
   reporting the power headroom of the terminal device in the first target objects that have a direct path and are in an active state.

43. The device according to claim 42, wherein the reporting of the power headroom of the terminal device in the first target object comprises at least one of the following:

   reporting a single power headroom corresponding to the first target object;
   reporting power headroom separately for different transmission path types under the first target object.

44. The device according to claim 42, wherein the terminal device transmits the power headroom of the terminal device in the first target object through the power headroom report, and the power headroom report further comprises at least one of the following:

the transmission path type corresponding to the reported power headroom for the first target object;

the transmission power used by the direct communication interface corresponding to the indirect path of the terminal device in the first target object;

the maximum transmission power allowed by the direct communication interface corresponding to the indirect path of the terminal device in the first target object;

the maximum transmission power allowed for the direct path of the terminal device in the first target object.

45. The device according to claim 33, further comprising:

a second reporting unit, configured to report terminal capability information;

wherein the terminal capability information comprises at least one of the following:

indicating whether the terminal device supports multi-path transmission;

indicating whether direct path and indirect path transmission are supported in the first target object, wherein the first target object comprises: a frequency band, a band combination, a cell, or different cells.

46. A reporting power headroom device applied to a network device, comprising:

a first receiving unit, configured to receive a power headroom report transmitted by a terminal device, wherein the power headroom report is transmitted to the network device by the terminal device when a transmission path type changes and a first condition is satisfied;

wherein the first condition comprises: the terminal device has obtained uplink resources from the network device, and the uplink resources can carry the power headroom report;

wherein the transmission path type comprises: a direct path and/or an indirect path;

wherein the direct path is a transmission path for direct communication between the terminal device and the network device, and the indirect path is a transmission path requiring relay by a relay device for communication between the terminal device and the network device.

47. The device according to claim 46, wherein the network device obtains the power headroom of the terminal device in the first target object through the power headroom report, and the power headroom report further comprises at least one of the following:

the transmission path type corresponding to the reported power headroom for the first target object;

the transmission power used by the direct communication interface corresponding to the indirect path of the terminal device in the first target object;

the maximum transmission power allowed by the direct communication interface corresponding to the indirect path of the terminal device in the first target object;

the maximum transmission power allowed for the direct path of the terminal device in the first target object;

wherein the first target object comprises: a cell, a carrier, or a bandwidth part (BWP).

48. The device according to claim 46, further comprising:

a second receiving unit, configured to receive terminal capability information sent by the terminal device;

wherein the terminal capability information comprises at least one of the following:

indicating whether the terminal device supports multi-path transmission;

indicating whether direct path and indirect path transmission are supported in the first target object, wherein the first target object comprises: a frequency band, a band combination, a cell, or different cells.

49. A processor-readable storage medium, wherein the processor-readable storage medium stores a computer program, and the computer program is configured to cause the processor to execute the method according to any one of claims 1 to 16.

Network device

Uu interface

U2N relay UE

Uu interface

Direct link

Remote UE

FIG. 1

Triggering power headroom reporting when transmission path type changes — S201

FIG. 2

Terminal device | UE-to-Network relay (U2N relay) | Network device

S301: control message

S302: PHR trigger determination

S303: Power headroom (PH) calculation

S304: power headroom reporting

FIG.3

Receiving a power headroom report from the terminal device — S401

FIG.4

Power headroom reporting device — 500

Triggering unit — 501

FIG. 5

Processor — 600

Bus interface

Transceiver — 610

Memory — 620

User interface — 630

FIG. 6

Power headroom reporting
device ⌐ 700

First receiving unit ⌐ 701

FIG. 7

Processor ⌐ 800

Bus interface

Transceiver ⌐ 810

Memory ⌐ 820

FIG.8

## INTERNATIONAL SEARCH REPORT

International application No.

**PCT/CN2023/105838**

| A. | CLASSIFICATION OF SUBJECT MATTER |
| --- | --- |

H04W52/36(2009.01)i

According to International Patent Classification (IPC) or to both national classification and IPC

| B. | FIELDS SEARCHED |
| --- | --- |

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

CNTXT, ENTXT, ENTXTC, WPABS, DWPI, VCN, CJFD, 3GPP: u2n中继, ue-nw中继, ue-to-network中继, 触发, 触发条件, 多, 链路, 路径, 改变, 更新, 功率余量, 激活, 减少, 配置, 增加, 直接传输路径, 直通, 直通路径, 中继, add, added, adding, delete, link, path, phr, PowerHeadroom, relay, u2n, multi-path, multi path, multi link, multi-link, Indirect link, ue-to-network relay, updat+, trigger condition?, modify+, configur+, activi+, inactiv+, u2n relay, trigger+ condition+, ue-to-network, new trigger condition?, ue-nw relay, direct path

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 115996481 A (DATANG MOBILE COMMUNICATIONS EQUIPMENT CO., LTD.) 21 April 2023 (2023-04-21)<br>description, paragraphs 96-97 and 131-138 | 1-49 |
| A | CN 111726856 A (HUAWEI TECHNOLOGIES CO., LTD.) 29 September 2020 (2020-09-29)<br>description, paragraphs 45-176, and claim 1 | 1-49 |
| A | CN 109803368 A (HUAWEI TECHNOLOGIES CO., LTD.) 24 May 2019 (2019-05-24)<br>entire document | 1-49 |
| A | US 2020163031 A1 (LENOVO (SINGAPORE) PTE. LTD.) 21 May 2020 (2020-05-21)<br>entire document | 1-49 |
| A | ZTE. "R1-1712313 On NR PHR Calculation"<br>*3GPP TSG RAN WG1 Meeting #90*, 25 August 2017 (2017-08-25),<br>entire document | 1-49 |

☑ Further documents are listed in the continuation of Box C. ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **10 October 2023** | **17 October 2023** |

| Name and mailing address of the ISA/CN | Authorized officer |
| --- | --- |
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

International application No.

**PCT/CN2023/105838**

**C.    DOCUMENTS CONSIDERED TO BE RELEVANT**

| Category* | Citation of document, with indication, where appropriate, of the relevant passages | Relevant to claim No. |
|---|---|---|
| A | QUALCOMM INC. "R2-2006559 Discussion on How to Avoid Frequent And Redundant PHR Triggered by Dormant BWP switch" *3GPP TSG RAN WG2 Meeting #111-e,* 28 August 2020 (2020-08-28), entire document | 1-49 |

Form PCT/ISA/210 (second sheet) (July 2022)

**INTERNATIONAL SEARCH REPORT**
Information on patent family members

International application No.

**PCT/CN2023/105838**

| Patent document cited in search report | | | Publication date (day/month/year) | Patent family member(s) | | | Publication date (day/month/year) |
|---|---|---|---|---|---|---|---|
| CN | 115996481 | A | 21 April 2023 | WO | 2023065941 | A1 | 27 April 2023 |
| CN | 111726856 | A | 29 September 2020 | WO | 2020187080 | A1 | 24 September 2020 |
| CN | 109803368 | A | 24 May 2019 | | None | | |
| US | 2020163031 | A1 | 21 May 2020 | WO | 2020104844 | A1 | 28 May 2020 |
| | | | | EP | 3884716 | A1 | 29 September 2021 |
| | | | | US | 2023199674 | A1 | 22 June 2023 |
| | | | | US | 10993195 | B2 | 27 April 2021 |
| | | | | US | 2021211995 | A1 | 08 July 2021 |
| | | | | US | 11601896 | B2 | 07 March 2023 |
| | | | | CN | 113039841 | A | 25 June 2021 |

Form PCT/ISA/210 (patent family annex) (July 2022)

**EP 4 590 035 A1**

**Patent documents cited in the description**

- CN 202211125043